# EUROPEAN PATENT SPECIFICATION

(11) **EP 3 532 290 B1**
(45) Date of publication and mention of the grant of the patent: **05.01.2022**
(21) Application number: 17808204.6
(22) Date of filing: 27.10.2017
(51) Int. Cl.: B32B 27/08, B32B 17/06, B32B 27/42, B32B 3/02, B32B 3/26, B32B 17/10, B32B 27/30

(54) **WEDGE-SHAPED MULTILAYER INTERLAYER AND GLASS LAMINATE**
KEILFÖRMIGE MERHSCHICHTIGE ZWISCHENSCHICHT UND GLASLAMINAT
COUCHE INTERMÉDIAIRE MULTICOUCHE ET CUNÉIFORME, ET STRATIFIÉ EN VERRE

(30) Priority: 28.10.2016 US 201662414015 P
(43) Date of publication of application: 04.09.2019
(73) Proprietor: Kuraray Europe GmbH, 65795 Hattersheim (DE)
(72) Inventor: OLSON, James, Sylvania OH 43560 (US); PUTS, Rutger, D., Garnet Valley PA 19060 (US); HANSEN, Steven, M., Wilmington DE 19803 (US)
(74) Representative: Janßen, Christian Oliver
(86) International application number: PCT/US2017/058776
(87) International publication number: WO 2018/081570

(56) References cited:
- EP-A1- 2 017 237
- EP-A1- 2 612 843
- WO-A1-2014/055583

## Description

### Field of the Invention

The present invention relates generally to a wedge-shaped multilayer interlayer with a "functional" interior layer and a glass laminate containing such interlayer. More particularly, the present invention relates to a partially- or fully-wedge-shaped multilayer interlayer based on the combination of an integrated multilayer sheet with an interior layer and a separate wedge-shaped film. This construction provides a wedge-shaped multilayer interlayer in which the interior layer has a substantially consistent thickness, and consequently a substantially consistent functional effect, throughout the entire length and width of the interlayer and resulting laminate made from such interlayer, and results in a wedge-shaped multilayer interlayer with fewer overall defects that can be made in a more convenient and consistent manner with less waste.

### Background of the Invention

While glass plates which are used for windowpanes and the like are excellent in durability and optical properties, structural, acoustic barrier, shatter resistance and other properties can be insufficient for many end uses.

Laminated glass is generally made by laminating two pieces of glass onto a plastic interlayer. The interlayer can greatly improve shatter resistance and other characteristics of the laminate as compared to a comparably thick glass sheet.

Traditionally, the plastic interlayer has been a monolayer sheet, but often the performance of a monolayer sheet can be deficient in one or more functional aspects. For example, a monolayer interlayer can be made stiff for structural strength, but usually to the disadvantage of acoustic damping properties.

In order to overcome some of the functional limitations of a monolayer interlayer, multilayer interlayers have been proposed. For example, multilayer interlayers with a relatively soft acoustic damping internal layer surrounded by skin layers of a stiffer material have been successfully employed in automotive and other end uses for sound-dampening laminates.

One complexity of multilayers interlayers is the production process, particularly when the various layers of different materials are coextruded into a unified laminate. Current manufacturing processes, however, can now generate such a coextruded multilayer interlayer with a consistent thickness of each of the individual layers as well as a consistent thickness throughout the whole multilayer structure.

Interlayers of varying opposite edge thickness have also been generated, for example, for use in preparing laminates for heads-up displays (HUDs) in vehicle windshields. These constructions are referred to as "wedge", and different variations of this are referred to as "full wedge" (thickness transition across entire width) and "partial wedge" (thickness transition across a portion of the width).

The production of wedge-shaped interlayer is complicated in that it requires special dies and other processing equipment. The production of wedge-shaped multilayers via coextrusion is even more complicated as multiple layers of different materials need to be sized and shaped at the same time, which in actual practice invariably results in inconsistencies in the thickness of the interior layer(s).

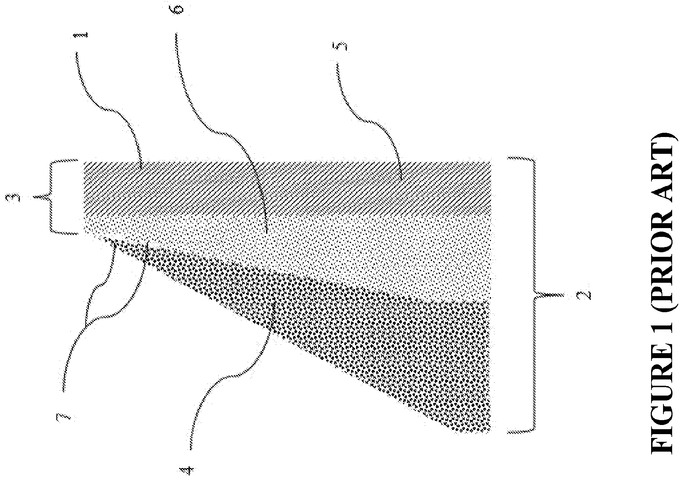

Figure 1 shows a conventional wedge-shaped multilayer interlayer (1) produced via coextrusion of all the layers, with the details of the figure exaggerated to more easily depict the structural shortcomings thereof. The interlayer (1) has a thicker end (2) and a thinner end (3) defining the wedge shape. As depicted, the interlayer has three distinct layers - a wedge-shaped first skin layer (4), a second skin layer (5) and an internal layer (6). Internal layer (6) is typically a functional layer, such as an acoustic damping layer, as disclosed in US20060210776A1 and US20090294212A1.

While the literature often shows coextruded wedge-shaped multilayer interlayer as being a consistent structure, in the real world it is far from it. A coextruded wedge-shaped multilayer interlayer is typically produced by holding one end fixed (thicker end (2)) during coextrusion and compressing the structure toward other end (thinner end (3)), which results in at least internal layer (6) (and usually also second skin layer (5) to a lesser extent) following the same general shape as wedge-shaped first skin layer (4). Internal layer (6), therefore, does not retain a consistent thickness throughout the interlayer, even under the most optimal production conditions.

When the internal layer is a functional layer, this can mean inconsistent functional performance across the entirety of the resulting interlayer and laminate. Depending on the function of the internal layer, the result can be inconsistent acoustic damping, structural, and/or color, clarity or other optical properties, over all or a portion of the laminate.

In additional, different forces along the layer boundaries as a result of the different polymers of the various interlayers and/or variable shear forces at the layer interface due to shaping are more likely to cause defects (7) at the layer interfaces, such as rippling and/or gaps, which can detrimentally affect the optical and other properties of the interlayer and particularly the resulting laminate made therefrom.

It is, therefore, highly desirable to have a consistent and optimized wedge-shaped multilayer interlayer structure and a process for achieving that consistent structure. EP2017237A1 discloses a interlayer comprising a sound-insulating layer having a rectangular cross-sectional shape sandwiched between two protection layers having also a rectangular cross-sectional shape, the interlayer comprising also a shape assisting layer having a wedge cross-sectional shape shape, laminated on the surface of one of the protection layers.

### Summary of the Invention

The present invention addresses the above-described problems by providing a wedge-shaped multilayer interlayer which has a substantially consistent thickness of an internal layer and fewer overall manufacturing defects with greater ease of manufacture and reduced waste.

In accordance with a first embodiment, the present invention provides a multilayer interlayer comprising:

an integrated multilayer sheet having a length, a width and a total thickness, comprising:
(a) a first skin layer A which is a layer of a first thermoplastic resin optionally containing one or more additives, the first skin layer having an exterior side, an interior side and a first thickness,
(b) a second skin layer C which is a layer of a second thermoplastic resin optionally containing one or more additives, the second skin layer having an exterior side, an interior side and a second thickness, and
   an interior layer B which is a layer of a third thermoplastic resin optionally containing one or more additives, the interior layer B being disposed between the interior side of first skin layer A and the interior side of second skin layer C and having a third thickness,
   wherein the multilayer interlayer is wedge-shaped having a thicker first edge and a thinner second edge,
   wherein each of the third thickness and the total thickness is individually substantially consistent throughout the length and width of the integrated multilayer sheet;
   the multilayer interlayer further comprises a wedge-shaped film of a fourth thermoplastic resin optionally containing one or more additives, the wedge-shaped film having an exterior side and an interior side, wherein the interior side of the wedge-shaped film is adhered directly or indirectly to the exterior side of first skin layer A,
   the thicker first edge has a thickness of about 1850 µm or less and the thinner second edge has a thickness of about 600 µm or more;
   characterized in that the integrated multilayer sheet forms the predominant portion of the thickness at both the thicker first edge and the thinner second edge.

Stated another way, the present invention provides a multilayer interlayer comprising:
(1) an integrated multilayer sheet having a length, a width and a total thickness, comprising:
   (a) a first skin layer A which is a layer of a first thermoplastic resin optionally containing one or more additives, the first skin layer having an exterior side, an interior side and a first thickness,
   (b) a second skin layer C which is a layer of a second thermoplastic resin optionally containing one or more additives, the second skin layer having an exterior side, an interior side and a second thickness, and
   (c) an interior layer B which is a layer of a third thermoplastic resin optionally containing one or more additives, the interior layer B being disposed between the interior side of first skin layer A and the interior side of second skin layer C, and having a third thickness,
   wherein each of the third thickness and the total thickness is individually substantially consistent throughout the length and width of the integrated multilayer sheet; and
(2) a wedge-shaped film of a fourth thermoplastic resin optionally containing one or more additives, the wedge-shaped film having an exterior side and an interior side, wherein the interior side of the wedge-shaped film is adhered directly or indirectly to the exterior side of first skin layer A,
   wherein the multilayer interlayer is wedge-shaped having a thicker first edge and a thinner second edge, wherein the thicker first edge has a thickness of about 1850 µm or less, wherein the thinner second edge has a thickness of about 600 µm or more, and wherein the integrated multilayer sheet forms the predominant portion of the thickness at both the thicker first edge and the thinner second edge.

In a specific embodiment, the integrated multilayer sheet is a co-extruded integrated multilayer sheet.

In another specific embodiment, the thicker first edge has a thickness of about 1600 µm or less.

In another specific embodiment, the interior layer B is a functional layer, for example, an acoustic-damping layer, a color layer, an IR-shielding layer, a UV-shielding layer, a barrier layer, or a combination thereof.

In another specific embodiment, the interior layer B is a softer layer relative to first skin layer A and second skin layer B, for example, an acoustic-damping layer.

In another specific embodiment, the multilayer interlayer comprises greater than four layers.

In another specific embodiment, the interior side of the wedge-shaped film is adhered directly to the exterior side of first skin layer A.

In another specific embodiment, the interior side of the wedge-shaped film and the exterior side of the first skin layer A are both adhered to a tie layer.

In another specific embodiment, the integrated multilayer sheet is a trilayer sheet.

In accordance with another embodiment, the present invention provides a laminate comprising a first exterior sheet and second exterior sheet having interposed therebetween a multilayer interlayer as described herein, wherein at least one of the exterior sheets is a sheet of glass.

In a more specific embodiment, the first and second sheets are both sheets of glass and are the same type of glass or each is a different type of glass. The laminate can be symmetric (both sheets of glass are substantially equal thickness) or asymmetric (the first and second sheets of glass are a different thickness) with respect to the glass.

Further, the laminate can be substantially clear or having coloring in all or a portion (for example, "shadeband" as discussed below).

In another embodiment, the present invention provides a process for preparing a wedge-shaped multilayer interlayer having a thicker first edge and a thinner second edge opposite the thinner first edge, wherein the thicker first edge has a thickness of about 1850 µm or less, and the thinner second edge has a thickness of about 600 µm or more, the process comprising the steps of:
(1) providing an integrated multilayer sheet having a length, a width and a total thickness, comprising:
   (a) a first skin layer A which is a layer of a first thermoplastic resin optionally containing one or more additives, the first skin layer having an exterior side, an interior side and a first thickness,
   (b) a second skin layer C which is a layer of a second thermoplastic resin optionally containing one or more additives, the second skin layer having an exterior side, an interior side and a second thickness, and
   (c) an interior layer B which is a layer of a third thermoplastic resin optionally containing one or more additives, the interior layer B being disposed between the interior side of first skin layer A and the interior side of second skin layer C and having a third thickness,
   wherein each of the third thickness and the total thickness is individually substantially consistent throughout the length and width of the integrated multilayer sheet;
(2) providing a wedge-shaped film of a fourth thermoplastic resin optionally containing one or more additives, the wedge-shaped film having an exterior side and an interior side, and
(3) adhering the interior side of the wedge-shaped film directly or indirectly to the exterior side of first skin layer A,
   wherein the integrated multilayer sheet forms the predominant portion of the thickness at both the thicker first edge and the thinner second edge.

By using the multilayer interlayers according to the present invention, it is possible to prepare a laminated glass which provides lower optical distortion as compared to the heretofore constructed laminated glasses while maintaining the same benefits, e.g., acoustic damping.

These and other embodiments, features and advantages of the present invention will be more readily understood by those of ordinary skill in the art from a reading of the following detailed description.

### Brief Description of the Drawings

**Figure 1** is a diagram of a coextruded multilayer wedge interlayer in accordance with the state of the art, but with exaggerated features.
**Figure 2** is a diagram of a first embodiment of coextruded integrated multilayer sheet suitable for preparing a multilayer interlayer in accordance with the present invention.
**Figure 3** is a diagram of a first embodiment of wedge-shaped film ("full wedge") suitable for preparing a multilayer interlayer in accordance with the present invention.
**Figure 4** is a diagram of a second embodiment of wedge-shaped film ("partial wedge") suitable for preparing a multilayer interlayer in accordance with the present invention.
**Figure 5** is a diagram of a first embodiment of a wedge-shaped multilayer laminate ("full wedge") in accordance with the present invention.
**Figure 6** is a diagram of a second embodiment of a wedge-shaped multilayer laminate ("partial wedge") in accordance with the present invention.

### Detailed Description

The present invention relates to a wedge-shaped multilayer interlayer, a glass laminate containing such multilayer interlayer and various end uses of such glass laminate. Further details are provided below.

Unless otherwise defined, all technical and scientific terms used herein have the same meaning as commonly understood by one of ordinary skill in the art to which this disclosure belongs. In case of conflict, the present specification, including definitions, will control.

Except where expressly noted, trademarks are shown in upper case.

Unless stated otherwise, all percentages, parts, ratios, *etc*., are by weight.

Unless stated otherwise, pressures expressed in psi units are gauge, and pressures expressed in kPa units are absolute. Pressure differences, however, are expressed as absolute (for example, pressure 1 is 25 psi higher than pressure 2).

When an amount, concentration, or other value or parameter is given as a range, or a list of upper and lower values, this is to be understood as specifically disclosing all ranges formed from any pair of any upper and lower range limits, regardless of whether ranges are separately disclosed. Where a range of numerical values is recited herein, unless otherwise stated, the range is intended to include the endpoints thereof, and all integers and fractions within the range. It is not intended that the scope of the present disclosure be limited to the specific values recited when defining a range.

Further, unless otherwise explicitly stated to the contrary, when one or multiple ranges or lists of items are provided, this is to be understood as explicitly disclosing any single stated value or item in such range or list, and any combination thereof with any other individual value or item in the same or any other list.

When the term "about" is used, it is used to mean a certain effect or result can be obtained within a certain tolerance, and the skilled person knows how to obtain the tolerance. When the term "about" is used in describing a value or an end-point of a range, the disclosure should be understood to include the specific value or end-point referred to.

As used herein, the terms "comprises," "comprising," "includes," "including," "has," "having" or any other variation thereof, are intended to cover a non-exclusive inclusion. For example, a process, method, article, or apparatus that comprises a list of elements is not necessarily limited to only those elements but can include other elements not expressly listed or inherent to such process, method, article, or apparatus.

The transitional phrase "consisting of" excludes any element, step, or ingredient not specified in the claim, closing the claim to the inclusion of materials other than those recited except for impurities ordinarily associated therewith. When the phrase "consists of" appears in a clause of the body of a claim, rather than immediately following the preamble, it limits only the element set forth in that clause; other elements are not excluded from the claim as a whole.

The transitional phrase "consisting essentially of" limits the scope of a claim to the specified materials or steps and those that do not materially affect the basic and novel characteristic(s) of the claimed invention. A "consisting essentially of' claim occupies a middle ground between closed claims that are written in a "consisting of' format and fully open claims that are drafted in a "comprising" format. Optional additives as defined herein, at a level that is appropriate for such additives, and minor impurities are not excluded from a composition by the term "consisting essentially of'.

Further, unless expressly stated to the contrary, "or" and "and/or" refers to an inclusive and not to an exclusive. For example, a condition A or B, or A and/or B, is satisfied by any one of the following: A is true (or present) and B is false (or not present), A is false (or not present) and B is true (or present), and both A and B are true (or present).

The use of "a" or "an" to describe the various elements and components herein is merely for convenience and to give a general sense of the disclosure. This description should be read to include one or at least one and the singular also includes the plural unless it is obvious that it is meant otherwise.

The term "predominant portion", as used herein, unless otherwise defined herein, means greater than 50% of the referenced measure. If not specified, for composition measures the percent is on a molar basis when reference is made to a molecule (such as hydrogen and ethylene), and otherwise is on a weight basis (such as for additive content).

The term "depleted" or "reduced" is synonymous with reduced from originally present. For example, removing a substantial portion of a material from a stream would produce a material-depleted stream that is substantially depleted of that material. Conversely, the term "enriched" or "increased" is synonymous with greater than originally present.

As used herein, the term "copolymer" refers to polymers comprising copolymerized units resulting from copolymerization of two or more comonomers. In this connection, a copolymer may be described herein with reference to its constituent comonomers or to the amounts of its constituent comonomers, for example "a copolymer comprising ethylene and 15 weight % of acrylic acid", or a similar description. Such a description may be considered informal in that it does not refer to the comonomers as copolymerized units; in that it does not include a conventional nomenclature for the copolymer, for example International Union of Pure and Applied Chemistry (IUPAC) nomenclature; in that it does not use product-by-process terminology; or for another reason. As used herein, however, a description of a copolymer with reference to its constituent comonomers or to the amounts of its constituent comonomers means that the copolymer contains copolymerized units (in the specified amounts when specified) of the specified comonomers. It follows as a corollary that a copolymer is not the product of a reaction mixture containing given comonomers in given amounts, unless expressly stated in limited circumstances to be such.

The term "dipolymer" refers to polymers consisting essentially of two monomers, and the term "terpolymer" refers to polymers comprising at least three monomers.

The term "acid copolymer" as used herein refers to a copolymer comprising copolymerized units of an α-olefin, an α,β-ethylenically unsaturated carboxylic acid, and optionally other suitable comonomer(s) such as, an α,β-ethylenically unsaturated carboxylic acid ester.

The term "(meth)acrylic", as used herein, alone or in combined form, such as "(meth)acrylate", refers to acrylic or methacrylic, for example, "acrylic acid or methacrylic acid", or "alkyl acrylate or alkyl methacrylate".

The term "ionomer" as used herein refers to a polymer that comprises ionic groups that are carboxylate salts, for example, ammonium carboxylates, alkali metal carboxylates, alkaline earth carboxylates, transition metal carboxylates and/or combinations of such carboxylates. Such polymers are generally produced by partially or fully neutralizing the carboxylic acid groups of precursor or parent polymers that are acid copolymers, as defined herein, for example by reaction with a base. An example of an alkali metal ionomer as used herein is a sodium ionomer, for example a copolymer of ethylene and methacrylic acid wherein all or a portion of the carboxylic acid groups of the copolymerized methacrylic acid units are in the form of sodium carboxylates. An example of a mixed metal ionomer as used herein is a zinc/sodium ionomer (or zinc/sodium neutralized mixed ionomer), for example a copolymer of ethylene and methacrylic acid wherein all or a portion of the carboxylic acid groups of the copolymerized methacrylic acid units are in the form of zinc carboxylates and sodium carboxylates.

The term "substantially consistent thickness" of a sheet means consistent thickness throughout the length and width of the sheet within variance of thickness of no more than about 7%, preferably no more than about 6%, more preferably no more than about 5%, still more preferably no more than about 4%, or still more preferably no more than about 3%.

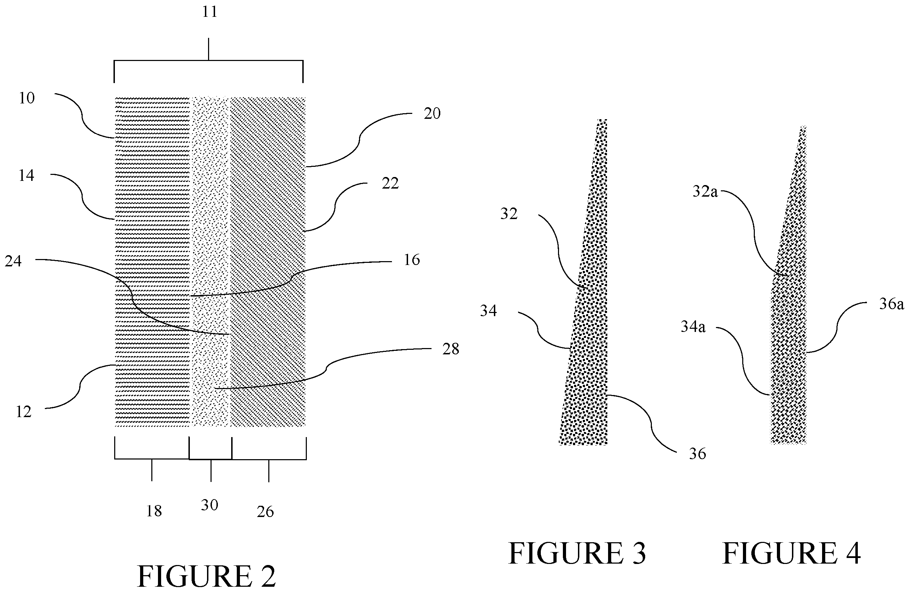

The term "sheet" means that portion of the multilayer interlayer which forms the predominant portion of the thickness of the interlayer at both the thicker first edge and thinner second edge. In accordance with the present invention, the integrated multilayer structure (such as shown in Figure 2) is a sheet. Desirably, the sheet in and of itself provides the necessary penetration resistance to the laminate as discussed below.

The term "film" means the portion of the multilayer interlayer that forms less than the predominant portion of the thickness of the interlayer at the thinner second edge, and which in and of itself does would not in its entirety provide the penetration resistance necessary to use it as a monolayer interlayer in a glass laminate. "Necessary penetration resistance" refers to the minimum penetration resistance for laminated glass as defined in accordance with 49 C.F.R. Section 571.205 and ANSI Z26.1-1996, as would be recognized by one of ordinary skill in the relevant art.

In accordance with the present invention, the wedge-shaped structure (such as shown in Figures 3 and 4) is a film, as it would not provide the penetration resistance necessary to use it as a monolayer interlayer in a glass laminate under the above standard, at a minimum, at its thinner edge.

Although methods and materials similar or equivalent to those described herein can be used in the practice or testing of the present disclosure, suitable methods and materials are described herein. The materials, methods, and examples herein are thus illustrative only and, except as specifically stated, are not intended to be limiting.

### Multilayer Interlayer

The present invention provides a wedge-shaped multilayer interlayer which has a substantially consistent thickness of an interior layer and fewer overall manufacturing defects with greater ease of manufacture and reduced waste.

In a first embodiment, the present invention provides a multilayer interlayer comprising:
(1) an integrated multilayer sheet having a length, a width and a total thickness, comprising:
   (a) a first skin layer A which is a layer of a first thermoplastic resin optionally containing one or more additives, the first skin layer having an exterior side, an interior side and a first thickness,
   (b) a second skin layer C which is a layer of a second thermoplastic resin optionally containing one or more additives, the second skin layer having an exterior side, an interior side and a second thickness, and
   (c) an interior layer B which is a layer of a third thermoplastic resin optionally containing one or more additives, the interior layer B being disposed between the interior side of first skin layer A and the interior side of second skin layer C and having a third thickness,
   wherein each of the third thickness and the total thickness is individually substantially consistent throughout the length and width of the integrated multilayer sheet; and
(2) a wedge-shaped film of a fourth thermoplastic resin optionally containing one or more additives, the wedge-shaped film having an exterior side and an interior side, wherein the interior side of the wedge-shaped film is adhered directly or indirectly to the exterior side of first skin layer A,
   wherein the multilayer interlayer is wedge-shaped having a thicker first edge and a thinner second edge, wherein the thicker first edge has a thickness of about 1850 µm or less, wherein the thinner second edge has a thickness of about 600 µm or more, and wherein the integrated multilayer sheet forms the predominant portion of the thickness at both the thicker first edge and the thinner second edge.

### Integrated Multilayer Sheet

As indicated above, the multilayer interlayer of the present invention is wedge-shaped and comprises a multilayer sheet (such as 10 in Fig. 2) of substantially consistent thickness (such as 11 in Fig. 2) combined with a wedge-shaped film (such as 32 in Fig. 3 or 32a in Fig. 4). In other words, the wedge shape of the interlayer of the present invention derives from the wedge-shaped film.

The laminate of the present invention is a laminate comprising the wedge-shaped multilayer interlayer laminated between two sheets of material, at least one of which is (and preferably both are) a sheet of glass.

Referring to Fig. 2, there is shown a first embodiment of integrated multilayer sheet 10 suitable for preparing a multilayer interlayer in accordance with the present invention.

As shown in Fig. 2, integrated multilayer interlayer sheet 10 is a trilayer construction comprising a first skin layer 12 (referred to interchangeably herein as "first skin layer," "first skin layer A" or "Layer A"), a second skin layer 20 (referred to interchangeably herein as "second skin layer," "second skin layer C" or "Layer C") and an interior layer 28 (referred to interchangeably herein as "interior layer," "interior layer B" or "Layer B").

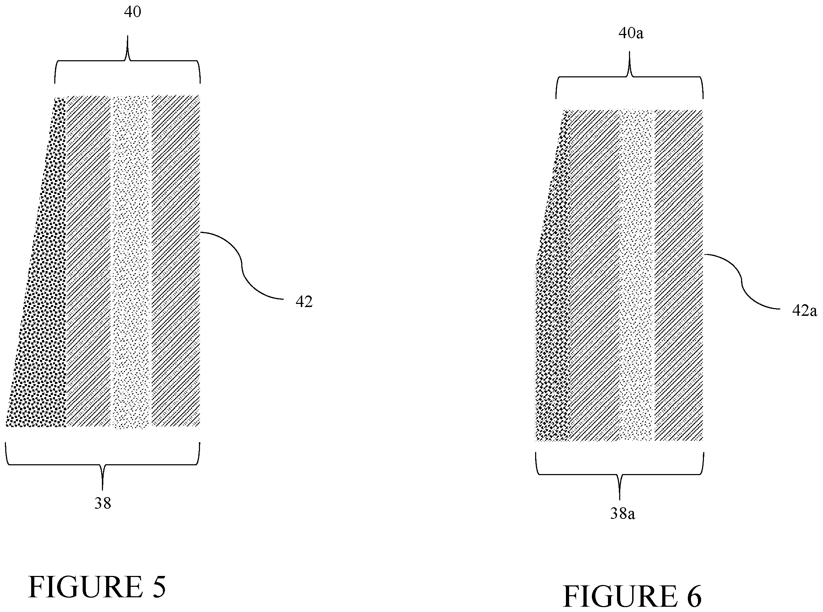

The interior side 16 of the first skin layer 12 is located at the interface between first skin layer 12 and interior layer 28, while the interior side 24 of the second skin layer 20 is located at the interface between second skin layer 20 and interior layer 28. Exterior side 14 of the first skin layer 12 can be in direct contact with the wedge-shaped film (as shown in Figures 5 and 6), while the exterior side 22 of the second skin layer 20 can be in direct contact with a second exterior sheet e.g., glass sheet (not pictured).

Each of the first skin layer 12, second skin layer 20 and interior layer 28 have an individual thickness 18, 26, and 30, respectively, which is defined below. In Fig. 2, each respective thickness is illustrated as being substantially consistent, but that is for exemplification only as the thicknesses of skin layers A and C can vary so long as the overall thickness 11 is substantially consistent throughout the length and width of multilayer interlayer sheet 10. In addition, each of first skin layer 12 and second skin layer 20 are shown as having a substantially equal thickness, but that is for exemplification only as first skin layer 12 and second skin layer 20 may have different thicknesses.

Integrated multilayer sheet 10 can be a combination of individual films that are combined after each individual film is produced, can be a combination of two or more coextruded films with a separate individual film or other coextruded films, or can be a co-extruded integrated multilayer sheet. In one embodiment, integrated multilayer sheet 10 is a co-extruded integrated multilayer sheet.

Integrated multilayer sheets suitable for use in the present invention, including but not limited to dimensions, compositions, end-use properties and methods of manufacture, are in a general sense well known to those of ordinary skill in the relevant art, as exemplified by EP0710545A1, EP2803648A1, JP2012214305A, JP2013006726A, JP2013006727A, US20030139520A1, US20060188965A1, US20060210782A1, US20060216485A1, US20060216485A1, US20060216501A1, US20070000593A1, US20080102280A1, US20080163977A1, US20080254302A1, US20080268204A1, US20090159362A1, US20100028642A1, US20100295331A1, US20110192678A1, US20120021321A1, US20120052274A1, US20120135191A1, US20120244329A1, US20120244364A1, US20120263958A1, US20120288722A1, US20130075949A1, US20130157065A1, US20130183507A1, US20130183532A1, US20130189528A1, US20130202863A1, US20130236693A1, US20130273378A1, US20130273379A1, US2013028540A1, US20130323516A1, US20140044941A1, US20140363651A1, US20150099132A1, US20150125656A1, US20150174862A1, US20160096349A1, US20160096350A1, US20160107424A1, US20160111077A1, US20160115380A1, US20160122526A1, US20160159049A1, US20160159050A1, US20160160025A1, US20160160026A1, US20160160027A1, US20160160028A1, US20160160029A1, US20160160033A1, US20160160034A1, US20160171961A1, US2016159047A1, US2016159048A1, US2016160032A1, US2016166024A1, US5190826, US5340654, WO2016076336A1, WO2016076337A1, WO2016076338A1, WO2016076339A1, WO2016076340A1 and US Patent Application Ser. No. 15/588,986 (filed 8 May 2017) (claiming priority from US Provisional Application Ser. No. 62/333,371 (filed 9 May 2016)).

In one embodiment, interior layer B is in direct contact with both skin layer A and skin layer C, but intermediate layers may also be utilized as discussed below. Examples of such intermediate layers include barrier films, color films and reflective films. For example, a color layer can be interposed between interior layer B and either of skin layer A or skin layer C. This configuration is typical of a shadeband laminate.

It is also envisioned in this invention that there may be multiple interior layers B, and/or other intermediate layers is positioned between the various layers.

For example, a shadeband version is envisioned in which the color layer is substantially in the center of the integrated multilayer. In an example of such variation, there may be two interior layers B, and the integrated multilayer is an at least 4-layer system (A/B1/B2/C).

Additional details of shadeband interlayers and laminates can be found, for example, by reference to US4316868, US8075983B2 and US7842395B2.

Again these configurations are just exemplary, and many additional configurations will be evident to those of ordinary skill in the relevant art from the references mentioned above and the description provided below.

### Skin Layers A and C

Skin layers A and C may be the same or different thermoplastic resins. In one embodiment, skin layers A and C are the same thermoplastic resin. In another embodiment, skin layers A and C are the same thermoplastic resin but with different compositions. In yet another embodiment, skin layers A and C are different thermoplastic resins.

In one embodiment, at least skin layer C contains a resin having adhesion to a glass. The resin having such properties is not particularly limited, and examples thereof include the above-described thermoplastic resins and the like.

Typically, the thermoplastic resin for skin layers A and/or C will be selected from a polyvinyl acetyl (such as a polyvinyl butyral) and an ionomer resin, as further described below and in the previously incorporated references.

In the skin layers A and C, as a component other than the thermoplastic resin, a plasticizer, an antioxidant, an ultraviolet ray absorber, a photostabilizer, an adhesion modifier, an antiblocking agent, a pigment, a dye, a heat shielding material (for example, an inorganic heat shielding fine particle or an organic heat shielding material each having infrared absorption ability), and the like may be added, if desired. Such additives are described in further detail below.

### Interior Layer B

In one embodiment of the present invention, interior layer B is a "functional" layer, that is, a layer that imparts a specific function to the overall multilayer interlayer and laminates produced therefrom.

In one embodiment, interior layer B is an acoustic-damping layer.

However, it is also generally envisioned within the present invention that interior layer B is a non-acoustic layer having a composition as described above for skin layers. When interior layer B is a non-acoustic layer, skin layer A being in direct or indirect contact with the wedge-shaped film can be an acoustic damping layer as described herein below. To this end, although the following description of the acoustic damping layer references interior layer B, it is understood to equally apply to skin layer A when this layer is an acoustic damping layer.

The present invention also envisions and embraces an embodiment wherein multiple interior layers B are present, especially where interior layer B is an acoustic-damping layer. In this embodiment it is preferred that an intermediate layer (e.g., a polyacrylic layer, a color layer, or a reflective film) be presented between adjacent interior layers B.

A response of stress when distortion of a sinusoidal waveform is applied to a viscoelastic body is defined as a complex modulus. At this time, a phase shift is generated between the sinusoidal wave of distortion to be applied and the sinusoidal wave of stress obtained as the response, and this phase difference is expressed in terms of δ. In addition, the complex modulus is expressed in terms of an equality using a complex number, and a real part of the complex modulus is called a storage modulus, whereas an imaginary part thereof is called a loss modulus. In particular, in the case of measuring dynamic viscoelastic characteristics of a viscoelastic body in a shear mode, they are called a complex shear modulus, a shear storage modulus, and a shear loss modulus, respectively. A value obtained by dividing the loss modulus by the storage modulus is called a loss tangent and expressed in terms of tan δ. The value of tan δ is a loss factor, and it is meant that the higher the loss factor at a certain temperature, the higher the sound insulating properties at that temperature.

When the value of tan δ in a construct composed of two kinds of viscoelastic bodies is plotted at every measuring temperature, in general, a bimodal curve is revealed. A peak (maximum point) on the low-temperature side is a peak derived from a relatively soft viscoelastic body, and a peak (maximum point) on the high-temperature side is a peak derived from a relatively hard viscoelastic body. In the present embodiment, when interior layer B is an acoustic-damping layer, the peak on the low-temperature side is a peak derived from the layer B (in the case where plural peaks are present, the instant peak means a highest peak), and the peak on the high-temperature side is a peak derived from the skin layers A and C, and the wedge-shaped film.

Layer B can be based on one or a combination of polyvinyl acetal resins, and in particular one or a combination of polyvinyl butyral resins, such as disclosed in previously mentioned EP0710545A1, EP2803648A1, JP2012214305A, JP2013006726A, JP2013006727A, US20030139520A1, US20060188965A1, US20060210782A1, US20060216485A1, US20080102280A1, US20080163977A1, US20080254302A1, US20080268204A1, US20090159362A1, US20100028642A1, US20100295331A1, US20110192678A1, US20120021321A1, US20120052274A1, US20120135191A1, US20120244329A1, US20120244364A1, US20120263958A1, US20120288722A1, US20130075949A1, US20130157065A1, US20130183507A1, US20130183532A1, US20130189528A1, US20130202863A1, US20130236693A1, US20130273378A1, US20130273379A1, US2013028540A1, US20130323516A1, US20140044941A1, US20140363651A1, US20150099132A1, US20150125656A1, US20150174862A1, US20160096349A1, US20160096350A1, US20160107424A1, US20160111077A1, US20160115380A1, US20160122526A1, US20160159049A1, US20160159050A1, US20160160025A1, US20160160026A1, US20160160027A1, US20160160028A1, US20160160029A1, US20160160033A1, US20160160034A1, US20160171961A1, US2016159047A1, US2016159048A1, US2016160032A1, US2016166024A1, US5190826, US5340654, US20060210776A1 and US20090294212A1.

Layer B can be based on one or a combination of thermoplastic elastomer resins, such as disclosed in previously mentioned WO2016076336A1, WO2016076337A1, WO2016076338A1, WO2016076339A1, WO2016076340A1 and US Patent Application Ser. No. 15/588,986 (filed 8 May 2017) (claiming priority from US Provisional Application Ser. No. 62/333,371 (filed 9 May 2016)), as well as US2010239802A1.

Examples of suitable thermoplastic elastomers include a polystyrene-based elastomer (soft segment: polybutadiene, polyisoprene/hard segment: polystyrene), a polyolefin-based elastomer (soft segment: ethylene propylene rubber/hard segment: polypropylene), a polyvinyl chloride-based elastomer (soft segment: polyvinyl chloride/hard segment: polyvinyl chloride), a polyurethane-based elastomer (soft segment: polyether, polyester, or polycarbonate/hard segment: polyurethane), a polyester-based elastomer (soft segment: aliphatic polyester/hard segment: aromatic polyester), a polyether ester-based elastomer (soft segment: polyether/hard segment: polyester), a polyamide-based elastomer (soft segment: polypropylene glycol, polytetramethylene ether glycol, polyester, or polyether/hard segment: polyamide (such as a nylon resin)), a polybutadiene-based elastomer (soft segment: amorphous butyl rubber/hard segment: syndiotactic 1,2-polybutadiene resin), an acrylic elastomer (soft segment: polyacrylate ester/hard segment: polymethyl methacrylate). It is to be noted that the above-described thermoplastic elastomers may be used solely or may be used in combination of two or more thereof.

In one embodiment, layer B contains two or more thermoplastic elastomers having a different peak temperature of tan δ (a temperature of the peak at which the tan δ is maximum) from each other. The sound insulating properties become high in the vicinity of a specified temperature related to the peak temperature of tan δ, and hence, in view of the fact that the layer B containing a thermoplastic elastomer contains two or more thermoplastic elastomers having a different peak temperature of tan δ from each other, the sound insulating properties can be enhanced over a broader temperature range.

In another embodiment, the thermoplastic elastomer has a sea-island phase separated structure in which the hard segment block is included as an island component and the soft segment block is included as a sea component.

In the layer B, an antioxidant, an ultraviolet ray absorber, a photostabilizer, an antiblocking agent, a pigment, a dye, a heat shielding material, an adhesion modifier and the like, or mixtures thereof, may be added as other components, if desired. Examples of the antioxidant, the ultraviolet ray absorber, the photostabilizer and the adhesion modifier include those to be contained in the layer B as described later.

When, for example, an inorganic heat shielding fine particle or a heat shielding compound as the heat shielding material is incorporated into the layer B to give a heat shielding function to the laminate, thereby forming a laminated glass, a transmittance at a wavelength of 1,500 nm can be regulated to about 50% or less, and/or the TDS (total direct solar) value (calculated from ISO 13837:2008) can be regulated to less than about 43%. The heat shielding material is described later in detail.

In one embodiment, no plasticizer is required for the thermoplastic elastomer of layer B, and the known disadvantages of plasticizer migration can be avoided. In such case, layer B is considered to be substantially plasticizer free (consist essentially of no plasticizer for the resin).

### Wedge-Shaped Film

Exemplary wedge-shaped film configurations of the present invention are illustrated in Figs. 3 and 4. As indicated above, the wedge-shaped structure in the context of the present invention (such as shown in Figures 3 and 4) is a film.

Specifically, Fig. 3 shows an exemplary illustration of the full wedge 32 and Fig. 4 shows an exemplary illustration of the partial wedge 32a. The specific angle/grade of the transition in the full wedge is not specifically limited; however, the full wedge is defined by a thickness transition (linear and/or non-linear) substantially across the entire width of the wedge-shaped film. Similarly, the specific angle/grade of the transition, as well as the inflection point(s) where the angle/grade alters in the partial wedge is not specifically limited. The partial wedge is defined by a thickness transition across a portion of the width.

Interior side 36 in Fig. 3 forms the interface between the full wedge 32 and the integrated multilayer sheet 10 at exterior side 14 of the first skin layer 12. Exterior side 34 forms the region of contact with the first exterior sheet, e.g., glass sheet (not pictured). An exemplary full wedge multilayer interlayer configuration 42 of the present invention is illustrated in exemplary Fig. 5. The full wedge multilayer interlayer configuration 42 has a thicker first edge 38 and a thinner second edge 40.

Interior side 36a in Fig. 4 forms the interface between the partial wedge 32a and the co-extruded integrated multilayer sheet at exterior side 14 of the first skin layer 12. Exterior side 34a forms the region of contact with the first exterior sheet, e.g., glass sheet (not pictured). An exemplary partial wedge multilayer interlayer configuration 42a of the present invention is illustrated in Fig. 6. The partial wedge multilayer interlayer configuration 42a has a thicker first edge 38a and a thinner second edge 40a.

Wedge-shaped films suitable for use in the present invention are, in a general sense, well known to those of ordinary skill in the relevant art, as exemplified by US5013134, US5087502, US5087502, US5499145, US5639538, US5812332, US6534152B2, US6636370B2, US6866918B2, US7521110B2, US7700179B2, US7794818B2, US20160200076A1 and US20160291324A1.

The wedge-shaped film of the present invention comprises a thermoplastic resin optionally containing one or more additives (as defined below). The wedge-shaped film has an exterior side (or outer edge) and interior side (or inner edge), wherein the exterior side is adhered directly or indirectly to the exterior side (or outside edge) of first skin layer A.

The composition of the wedge-shaped film is as described above for the skin layers. The wedge-shaped film should comprise a thermoplastic resin having adhesion to a glass

In one embodiment, the composition of the wedge-shaped film is the same as skin layer A. In another embodiment, the thermoplastic resin used for the wedge-shaped film is the same as the thermoplastic resin used for skin layer A, but contains a different additive package. In another embodiment, the thermoplastic resin used for the wedge-shaped film is the same general type of resin as used for skin layer A, but with different characteristics (two types of polyvinyl acetal resins, or two types of polyvinylbutyral resins). In another embodiment, the thermoplastic resin used for the wedge-shaped film is different than the resin used for skin layer A (polyvinyl acetal and ionomer).

The full or standard wedge configuration of the present invention typically be an isosceles trapezoid or a right trapezoid with the thickness varying gradually from one edge to the other, with a wedge angle typically in the range of from about 0.15 mrad, or about 0.2 mrad, or about 0.3 mrad, to about 0.65 mrad, or about 0.6 mrad, or about 0.5 mrad, and with a difference between the thick and thin sides typically greater than about 0.1 mm.

The wedge angle may also vary as a function of the vertical position on the ultimate laminate, generally within the ranges as disclosed above, as disclosed in previously mentioned US20160200076A1 and US20160291324A1. In such case, the wedge surface is angled but non-linear over at least a portion (for example a curved section) such that the wedge angle along the non-linear portion substantially continuously (or continuously) varies along the length of the non-linear portion.

The partial wedge configuration of the present invention involves a wedge-shaped film that typically has a uniform thickness profile for at least about 20% of the width and then a wedge shaped profile with the thickness decreasing from the area of uniform thickness, and wedge angles and other ranges would be similar to standard wedge. The uniform thickness portion can be one one edge, both edges and/or at a portion inbetween.

Of course, to form a partial wedge configuration, the portion having a uniform thickness profile cannot be 100% of the width. Thus, the upper limit for the portion(s) having a uniform thickness is about 90%, or about 80%, or about 75%, or about 70%, or about 60%, or about 50%, or about 40%, or about 30%. The portion(s) having a uniform thickness typically has a minimum of at least about 20%, or at least about 25%, or at least about 30%, or at least about 40%, or at least about 50%, of the width. All ranges and sub-ranges formed by these alternative upper and lower limits are embraced and described as a part of the present invention.

The production method of the wedge-shaped film is not particularly limited and can be prepared by a known film formation method, such as an extrusion method, a calender method, a pressing method, a casting method and an inflation method, and reference can be had to the previously incorporated publications for further details.

### Thermoplastic Resins

In the multilayer interlayer of the present invention, it is preferred that each layer individual comprise at least one thermoplastic resin. Suitable thermoplastic resins are well-known to those of ordinary skill in the relevant art and include, for example, a polyvinyl acetal resin, an ionomer resin, an ethylene vinyl acetate copolymer resin, an adhesive functional group-containing polyolefin resin and/or a thermoplastic elastomer. A general description and examples of these thermoplastic resins can be had by reference to the previously incorporated publications mentioned in the "Integrated Multilayer Sheet" and "Wedge-Shaped Film" discussions above, as well as in previously mentioned US20060210776A1 and US20090294212A1.

Desirably, each of skin layer A, skin layer C and the wedge-shaped film is individually formed from a polyvinyl acetal resin or an ionomer resin, and more particularly from a polyvinylbutyral resin or an ionomer resin.

Desirably, interior layer B is formed from a polyvinyl acetal resin or a thermoplastic elastomer resin, and more particularly from a polyvinylbutyral resin or a thermoplastic elastomer resin.

When an ionomer is used as the thermoplastic resin, no plasticizer is required, and the known disadvantages of plasticizer migration can be avoided. In such case, skin layers A and/or C and the wedge-shaped film are considered to be substantially plasticizer free (consist essentially of no plasticizer for the resin). When in addition there is no plasticizer in interior layer B, the interlayer as a whole can be substantially plasticizer free (consist essentially of no plasticizer for the interlayer).

### Polyvinyl Acetal Resin

Polyvinyl acetal resins suitable for use in interlayers and laminates are, in a general sense, well known to those of ordinary skill in the relevant art as exemplified by the many previously mentioned references.

The polyvinyl acetal resin can be produced by conventionally known methods. For example, the polyvinyl acetal resin can be produced by acetalization of polyvinyl alcohol with an aldehyde. Specifically, there is exemplified a method in which polyvinyl alcohol is dissolved in warm water, the resulting aqueous solution is held at a prescribed temperature, for example, 0°C or higher, preferably 10°C or higher and 90°C or lower, and preferably 20°C or lower, the necessary acid catalyst and aldehyde are added, the acetalization reaction is allowed to proceed while stirring, and subsequently, the reaction temperature is increased to 70°C to conduct aging, thereby accomplishing the reaction, followed by neutralization, water washing, and drying to obtain a powder of the polyvinyl acetal resin.

A viscosity average polymerization degree of polyvinyl alcohol serving as a raw material of the polyvinyl acetal resin is typically 100 or more, or 300 or more, or 400 or more, or 600 or more, or 700 or more, or 750 or more, or 900 or more, or 1200 or more. When the viscosity average polymerization degree of polyvinyl alcohol is too low, there is a concern that the penetration resistance or creep resistance properties, particularly creep resistance properties under high-temperature and high-humidity conditions, such as those at 85°C and at 85% RH, are lowered. In addition, the viscosity average polymerization degree of polyvinyl alcohol is typically 5000 or less, or 3000 or less, or 2500 or less, or 2300 or less, or 2000 or less. When the viscosity average polymerization degree of polyvinyl alcohol is more than 5000, there is a concern that the extrusion of a resin film is difficult.

It is to be noted that since the viscosity average polymerization degree of the polyvinyl acetal resin coincides with the viscosity average polymerization degree of polyvinyl alcohol serving as a raw material, the above-described preferred viscosity average polymerization degree of polyvinyl alcohol coincides with the preferred viscosity average polymerization degree of the polyvinyl acetal resin.

The polyvinyl acetal resin is generally constituted of vinyl acetal units, vinyl alcohol units and vinyl acetate units, and these respective units can be, for example, measured by the "Testing Methods for Polyvinyl Butyral" of JIS K 6728, or a nuclear magnetic resonance method (NMR).

Typically, the vinyl acetate unit content of the resulting polyvinyl acetal resin is 30 mol% or less, or 20 mole % or less, and hence, it is preferred to use polyvinyl alcohol having a saponification degree of 70 mol% or more, or 80 mol% or more. When the saponification degree of polyvinyl alcohol is less than 70 mol%, there is a concern that transparency or heat resistance of the polyvinyl acetal resin is lowered, and also there is a concern that the reactivity with the aldehyde is lowered, too. The saponification degree is desirably 95 mol% or more.

An average degree of acetalization of the polyvinyl acetal resin is typically 40 mol% or more, and 90 mol% or less. When the average degree of acetalization is less than 40 mol%, the compatibility with a solvent, such as a plasticizer, etc., is not preferred. When the average degree of acetalization is more than 90 mol%, there is a concern that the reaction for obtaining the polyvinyl acetal resin takes a long time, so that such is not preferred from the process standpoint. The average degree of acetalization is desirably 60 mol% or more, and from the viewpoint of water resistance, it should be 65 mol% or more. In addition, the average degree of acetalization is desirably preferably 85 mol% or less, or 80 mol% or less.

A content of the vinyl alcohol unit of the polyvinyl acetal resin is typically 5 mol% or more, or 10 mol% or more, or 15 mol% or more, or 18 mol% or more, or 20 mol% or more, or 22 mol% or more, or 25 mol% or more. The content of the vinyl alcohol unit of the polyvinyl acetal resin is typically 50 mol% or less, or 45 mol% or less, or 40 mol% or less, or 35 mol% or less, or 30 mol% or less, or 25 mol% or less, or 20 mol% or less.

When the content of the vinyl alcohol unit is smaller than 5 mol%, there is a tendency that the adhesion to a glass is lowered. In addition, in the case where a compound having a hydroxyl group as described later is used as the plasticizer, the hydroxyl group of the plasticizer and the polyvinyl acetal resin tend not to have sufficient interaction (hydrogen bonding) and, as a result, the compatibility between the polyvinyl acetal resin and the plasticizer decreases, so that the plasticizer is liable to migrate into another resin layer. When the content of the vinyl alcohol units is more than 50 mol%, there is a tendency that the water resistance is lowered, or it becomes difficult to control the penetration resistance or impact resistance function required for an intermediate film as the safety glass. In addition, there is a tendency that compatibility with a solvent, such as a plasticizer, etc., is lowered to cause bleedout of the plasticizer, or hygroscopicity of the laminate becomes high, so that humidity resistance is lowered, or whitening is liable to be caused.

In the case where the polyvinyl acetal resin contains a unit other than the vinyl acetal unit, by measuring a unit quantity of vinyl alcohol and a unit quantity of vinyl acetate and subtracting these both unit quantities from a vinyl acetal unit quantity in the case of not containing a unit other than the vinyl acetal unit, the remaining vinyl acetal unit quantity can be calculated.

The aldehyde which is used for acetalization of polyvinyl alcohol is preferably an aldehyde having 1 or more and 12 or less carbon atoms. When the carbon number of the aldehyde is more than 12, the reactivity of the acetalization is lowered, and moreover, blocking of the resin is liable to be generated during the reaction, and the synthesis of the polyvinyl acetal resin is liable to be accompanied with difficulties.

The aldehyde is not particularly limited, and examples thereof include aliphatic, aromatic, or alicyclic aldehydes, such as formaldehyde, acetaldehyde, propionaldehyde, n-butyl aldehyde, isobutyl aldehyde, valeraldehyde, n-hexyl aldehyde, 2-ethylbutyl aldehyde, n-heptyl aldehyde, n-octyl aldehyde, n-nonyl aldehyde, n-decyl aldehyde, benzaldehyde, cinnamaldehyde, etc. Of those, aliphatic aldehydes having 2 or more and 6 or less carbon atoms are preferred, and above all, butyl aldehyde is especially preferred. In addition, the above-described aldehydes may be used solely or may be used in combination of two or more thereof. Furthermore, a small amount of a polyfunctional aldehyde or an aldehyde having other functional group, or the like may also be used in combination in an amount in the range of 20% by mass or less.

The polyvinyl acetal resin is most preferably polyvinyl butyral.

Use of a polyvinyl acetal resin typically requires the use of a plasticizer. Though the plasticizer is not particularly limited, the following types of plasticizers are typically utilized: carboxylic acid ester-based plasticizers, such as monovalent carboxylic acid ester-based or polyvalent carboxylic acid ester-based plasticizers; phosphate ester-based plasticizers; organic phosphite ester-based plasticizers; polymeric plasticizers, such as carboxylic acid polyester-based, carbonic acid polyester-based, or polyalkylene glycol-based plasticizers; ester compounds of a hydroxycarboxylic acid and a polyhydric alcohol, such as castor oil; and hydroxycarboxylic acid ester-based plasticizers, such as an ester compound of a hydroxycarboxylic acid and a monohydric alcohol.

The monovalent carboxylic acid ester-based plasticizer is a compound obtained through a condensation reaction between a monovalent carboxylic acid, such as butanoic acid, isobutanoic acid, hexanoic acid, 2-ethylbutanoic acid, heptanoic acid, octylic acid, 2-ethylhexanoic acid, lauric acid, etc., and a polyhydric alcohol, such as ethylene glycol, diethylene glycol, triethylene glycol, tetraethylene glycol, polyethylene glycol, polypropylene glycol, glycerin, etc., and specific examples of the compound include triethylene glycol di-2-diethylbutanoate, triethylene glycol diheptanoate, triethylene glycol di-2-ethylhexanoate, triethylene glycol dioctanoate, tetraethylene glycol di-2-ethylbutanoate, tetraethylene glycol diheptanoate, tetraethylene glycol di-2-ethylhexanoate, tetraethylene glycol dioctanoate, diethylene glycol di-2-ethylhexanoate, PEG#400 di-2-ethylhexanoate, triethylene glycol mono-2-ethylhexanoate, a fully or partially esterified compound of glycerin or diglycerin with 2-ethylhexanoic acid, and the like. "PEG#400" as referred to herein expresses a polyethylene glycol having an average molecular weight of 350 to 450.

As the polyvalent carboxylic acid ester-based plasticizer, there are exemplified compounds obtained through a condensation reaction between a polyvalent carboxylic acid, such as adipic acid, succinic acid, azelaic acid, sebacic acid, phthalic acid, isophthalic acid, terephthalic acid, trimellitic acid, etc., and an alcohol having 1 to 12 carbon atoms, such as methanol, ethanol, butanol, hexanol, 2-ethylbutanol, heptanol, octanol, 2-ethylhexanol, decanol, dodecanol, butoxyethanol, butoxyethoxyethanol, benzyl alcohol, etc. Specific examples of the compound include dihexyl adipate, di-2-ethylbutyl adipate, diheptyl adipate, dioctyl adipate, di-2-ethylhexyl adipate, di(butoxyethyl) adipate, di(butoxyethoxyethyl) adipate, mono(2-ethylhexyl) adipate, dibutyl sebacate, dihexyl sebacate, di-2-ethylbutyl sebacate, dibutyl phthalate, dihexyl phthalate, di(2-ethylbutyl) phthalate, dioctyl phthalate, di(2-ethylhexyl) phthalate, benzylbutyl phthalate, didodecyl phthalate, and the like.

Examples of the phosphoric acid-based plasticizer or phosphorous acid-based plasticizer include compounds obtained through a condensation reaction between phosphoric acid or phosphorous acid and an alcohol having 1 to 12 carbon atoms, such as methanol, ethanol, butanol, hexanol, 2-ethylbutanol, heptanol, octanol, 2-ethylhexanol, decanol, dodecanol, butoxyethanol, butoxyethoxyethanol, benzyl alcohol, etc. Specific examples of the compound include trimethyl phosphate, triethyl phosphate, tripropyl phosphate, tributyl phosphate, tri(2-ethylhexyl) phosphate, tri(butoxyethyl) phosphate, tri(2-ethylhexyl) phosphite, and the like.

As the carboxylic acid polyester-based plasticizer, there may be used carboxylic acid polyesters obtained through alternate copolymerization between a polyvalent carboxylic acid, such as oxalic acid, malonic acid, succinic acid, adipic acid, suberic acid, sebacic acid, dodecane diacid, 1,2-cyclohexanedicarboxylic acid, 1,3-cyclohexanedicarboyxlic acid, 1,4-cyclohexanedicarboxylic acid, etc., and a polyhydric alcohol, such as ethylene glycol, diethylene glycol, triethylene glycol, tetraethylene glycol, 1,2-propylene glycol, 1,3-propylene glycol, 1,2-butylene glycol, 1,3-butylene glycol, 1,4-butylene glycol, 1,2-pentanediol, 1,5-pentanediol, 2,4-pentanediol, 1,2-hexanediol, 1,6-hexanediol, 3-methyl-1,5-pentanediol, 3-methyl-2,4-pentanediol, 1,2-heptanediol, 1,7-heptanediol, 1,2-octanediol, 1,8-octanediol, 1,2-nonanediol, 1,9-nonanediol, 2-methyl-1,8-octanediol, 1,2-decanediol, 1,10-decanediol, 1,2-dodecanediol, 1,12-dodecanediol, 1,2-cyclohexanediol, 1,3-cyclohexanediol, 1,4-cyclohexanediol, 1,2-bis(hydroxymethyl)cyclohexane, 1,3-bis(hydroxymethyl)cyclohexane, 1,4-bis(bydroxymetbyl)cyclobexane, etc.; polymers of hydroxycarboxylic acids (hydroxycarboxylic acid polyesters) of an aliphatic hydroxycarboxylic acid, such as glycolic acid, lactic acid, 2-hydroxybutyric acid, 3-hydroxybutyric acid, 4-hydroxybutyric acid, 6-hydroxyhexanoic acid, 8-hydroxyhexanoic acid, 10-hydroxydecanoic acid, and 12-hydroxydodecanoic acid, or a hydroxycarboxylic acid having an aromatic ring, such as 4-hydroxybenzoic acid, 4-(2-hydroxyethyl)benzoic acid, etc.; and carboxylic acid polyesters obtained through ring opening polymerization of a lactone compound, such as an aliphatic lactone compound, e.g., γ-butyrolactone, γ-valerolactone, δ-valerolactone, β-methyl-δ-valerolactone, δ-hexanolactone, ε-caprolactone, lactide, etc., a lactone compound having an aromatic ring, phthalide, or the like. A terminal structure of such a carboxylic acid polyester is not particularly limited, and it may be a hydroxyl group or a carboxyl group, or it may also be an ester bond resulting from allowing a terminal hydroxyl group or a terminal carboxyl group to react with a monovalent carboxylic acid or a monohydric alcohol.

Examples of the carbonic acid polyester-based plasticizer include carbonic acid polyesters obtained through alternate copolymerization of a polyhydric alcohol, such as ethylene glycol, diethylene glycol, triethylene glycol, tetraethylene glycol, 1,2-propylene glycol, 1,3-propylene glycol, 1,2-butylene glycol, 1,3-butylene glycol, 1,4-butylene glycol, 1,2-pentanediol, 1,5-pentanediol, 2,4-pentanediol, 1,2-hexanediol, 1,6-hexanediol, 3-methyl-1,5-pentanediol, 3-methyl-2,4-pentanediol, 1,2-pentanediol, 1,7-heptanediol, 1,2-octanediol, 1,8-octanediol, 1,2-nonanediol, 1,9-nonanediol, 2-methyl-1,8-octnediol, 1,2-decanediol, 1,10-decanediol, 1,2-dodecanediol, 1,12-dodecanediol, 1,2-cyclohexanediol, 1,3-cyclohexanediol, 1,4-cyclohexanediol, 1,2-bis(hydroxymethyl)cyclohexane, 1,3-bis(hydroxymethyl)cyclohexane, 1,4-bis(hydroxymethyl)cyclohexane, etc. and a carbonate ester, such as dimethyl carbonate, diethyl carbonate, etc., by means of an ester interchange reaction. Though a terminal structure of such a carbonic acid polyester compound is not particularly limited, it may be a carbonate ester group, a hydroxyl group, or the like.

Examples of the polyalkylene glycol-based plasticizer include polymers obtained through ring opening polymerization of an alkylene oxide, such as ethylene oxide, propylene oxide, butylene oxide, oxetane, etc., with a monohydric alcohol, a polyhydric alcohol, a monovalent carboxylic acid, or a polyvalent carboxylic acid as an initiator.

Examples of the hydroxycarboxylic acid ester-based plasticizer include monohydric alcohol esters of a hydroxycarboxylic acid, such as methyl ricinoleate, ethyl ricinoleate, butyl ricinoleate, methyl 6-hydroxyhexanoate, ethyl 6-hydroxyhexanoate, and butyl 6-hydroxyhexnoate; polyhydric alcohol esters of a hydroxycarboxylic acid, such as ethylene glycol di(6-hydroxyhexanoic acid) ester, diethylene glycol di(6-hydroxyhexanoic acid) ester, triethylene glycol di(6-hydroxyhexanoic acid) ester, 3-methyl-1,5-pentanediol di(6-hydroxyhexanoic acid) ester, 3-methyl-1,5-pentanediol di(2-hydroxybuturic acid) ester, 3-methyl-1,5-pentanediol di(3-hydroxybutyric acid) ester, 3-methyl-1,5-pentanediol di(4-hydroxybutyric acid) ester, triethylene glycol di(2-hydroxybutyric acid) ester, glycerin tri(ricinoleic acid) ester, and di(1-(2-ethylhexyl)) L-tartarate; and castor oil. Besides, polyhydric alcohol ester compounds of a hydroxyl carboxylic acid in which a number of k groups derived from a hydroxycarboxylic acid are replaced with a group derived from a carboxylic acid not containing a hydroxyl group or with a hydrogen atom can also be used, and as such a hydroxyl carboxylic acid ester, those obtained by a conventionally known method can also be used.

In the present invention, these plasticizers may be used solely or may be used in combination of two or more thereof.

From the viewpoint of compatibility with polyvinyl acetal resins, low migration properties into another layer, and enhancement of non-migration properties, an ester-based plasticizer or an ether-based plasticizer can be used, (i) each of which has a melting point of 30°C or lower and a hydroxyl value of 15 mgKOH/g or more and 450 mgKOH/g or less, or (ii) each of which is amorphous and has a hydroxyl value of 15 mgKOH/g or more and 450 mgKOH/g or less. The term "amorphous" as referred to herein means that a melting point is not observed at a temperature of -20°C or higher. The hydroxyl value is typically 15 mgKOH/g or more, or 30 mgKOH/g or more, or 45 mgKOH/g or more. In addition, the hydroxyl value is typically 450 mgKOH/g or less, or 360 mgKOH/g or less, or 280 mgKOH/g or less. Examples of the ester-based plasticizer include polyesters satisfying the above-described prescriptions (e.g., the above-described carboxylic acid polyester-based plasticizer and carbonic acid polyester-based plasticizers, etc.) and hydroxycarboxylic acid ester compounds (e.g., the above-described hydroxycarboxylic acid ester-based plasticizers, etc.), and examples of the ether-based plasticizer include polyether compounds satisfying the above-described prescriptions (e.g., the above-described polyalkylene glycol-based plasticizers, etc.).

A compound having a hydroxyl group can be used as the plasticizer. A proportion of the content of the compound having a hydroxyl group relative to the total amount of the plasticizer to be used for the layer B is typically 10% by mass or more, or 15% by mass or more, or 20% by mass or more, or 50% by mass or more, or 70% by mass or more, or 80% by mass or more, or 90% by mass or more. The proportion of the content of the compound having a hydroxyl group relative to the total amount of the plasticizer to be used for the layer B is typically 100% by mass or less, or 90% by mass or less, or 80% by mass or less. The compound having a hydroxyl group has high compatibility with the resin, particularly the polyvinyl acetal resin, and is low in migration properties into another resin layer, and hence, a laminate with excellent stability in sound insulating performance can be obtained.

Plasticizer content is a function of a number of variables recognized by those of ordinary skill in the relevant art, including but not limited to type of plasticizer, thermoplastic resin composition and layer function. It is to be noted that two or more plasticizers may also be used in combination. Further details can be found by reference to the previously incorporated publications.

### Ionomer

In an embodiment of the present invention, one or more of skin layer A, skin layer C and the wedge-shaped film may be an ionomer.

The kind of the ionomer is not particularly limited, and examples thereof include resins having a constituent unit derived from ethylene and a constituent unit derived from an α,β-unsaturated carboxylic acid, in which at least a part of the α,β-unsaturated carboxylic acid is neutralized with a cation. As the cation, there is, for example, a sodium ion. In the ethylene·α,β-unsaturated carboxylic acid copolymer serving as a base polymer, a content proportion of the constituent unit of an α,β-unsaturated carboxylic acid is preferably 2% by mass or more, and more preferably 5% by mass or more. In addition, the content proportion of the constituent unit of an α,β-unsaturated carboxylic acid is preferably 30% by mass or less. In the present invention, from the standpoint of easiness of availability, an ionomer of an ethylene·acrylic acid copolymer and an ionomer of an ethylene·methacrylic acid copolymer are preferred. As for examples of the ethylene-based ionomer, there can be exemplified a sodium ionomer of an ethylene·acrylic acid copolymer and a sodium ionomer of an ethylene·methacrylic acid copolymer as especially preferred examples.

Examples of the α,β-unsaturated carboxylic acid constituting the ionomer include acrylic acid, methacrylic acid, maleic acid, monomethyl maleate, monoethyl maleate, maleic anhydride, and the like. Of those, acrylic acid or methacrylic acid is especially preferred.

Suitable first α,β-ethylenically unsaturated acid comonomers include, without limitation, acrylic acid, methacrylic acid, itaconic acid, maleic acid, fumaric acid, and mixtures of two or more thereof. In one preferred copolymer, the α,β-ethylenically unsaturated carboxylic acid is selected from acrylic acid, methacrylic acid, and mixtures of two or more thereof. In another preferred copolymer, the α,β-ethylenically unsaturated carboxylic acid is methacrylic acid.

The ethylene acid copolymer may further comprise copolymerized units of one or more additional comonomer(s), such as an α,β-ethylenically unsaturated carboxylic acid ester. Alkyl esters having 3 to 10, or preferably 3 to 8 carbons, are preferred. Specific examples of preferred esters of unsaturated carboxylic acids include, without limitation, methyl acrylate, methyl methacrylate, ethyl acrylate, ethyl methacrylate, propyl acrylate, propyl methacrylate, isopropyl acrylate, isopropyl methacrylate, n-butyl acrylate, n-butyl methacrylate, isobutyl acrylate, isobutyl methacrylate, tert-butyl acrylate, tert-butyl methacrylate, octyl acrylate, octyl methacrylate, undecyl acrylate, undecyl methacrylate, octadecyl acrylate, octadecyl methacrylate, dodecyl acrylate, dodecyl methacrylate, 2-ethylhexyl acrylate, 2-ethylhexyl methacrylate, isobornyl acrylate, isobornyl methacrylate, lauryl acrylate, lauryl methacrylate, 2-hydroxyethyl acrylate, 2-hydroxyethyl methacrylate, glycidyl acrylate, glycidyl methacrylate, dimethyl maleate, diethyl maleate, dibutyl maleate, dimethyl fumarate, diethyl fumarate, dibutyl fumarate, dimethyl fumarate, vinyl acetate, vinyl propionate, and mixtures of two or more thereof. In one preferred copolymer, the suitable additional comonomers are selected from methyl acrylate, methyl methacrylate, n-butyl acrylate, n-butyl methacrylate, isobutyl acrylate, isobutyl methacrylate, glycidyl methacrylate, vinyl acetate, and mixtures of two or more thereof. In a more preferred embodiment, the suitable additional comonomers is one or more of n-butyl acrylate, n-butyl methacrylate, isobutyl acrylate and isobutyl methacrylate, and still more preferably one or both of n-butyl acrylate and isobutyl acrylate.

Suitable ethylene acid copolymers have a melt flow rate (MFR) of from about 1, or from about 2, to about 4000 g/10 min, or to 1000 g/10 min, or to about 400 g/10 min, as determined in accordance with ASTM method D1238-89 at 190°C and 2.16 kg.

Finally, suitable ethylene acid copolymers may be synthesized as described, for example, in US3404134, US5028674, US6500888B2, US6518365B1, US8334033B2 and US8399096B2. In one embodiment, a method described in US8399096B2 is used, and a sufficiently high level and complementary amount of the derivative of the second α,β-ethylenically unsaturated carboxylic acid is present in the reaction mixture.

To obtain the ionomers, the ethylene acid copolymers are partially neutralized by reaction with one or more bases. An example of a suitable procedure for neutralizing the ethylene acid copolymers is described in US3404134 and US 6518365B1. After neutralization, about 1%, or about 10%, or about 15%, or about 20%, to about 90%, or to about 60%, or to about 55%, or to about 30%, of the hydrogen atoms of carboxylic acid groups present in the ethylene acid copolymer are replaced by other cations. Stated alternatively, about 1%, or about 10%, or about 15%, or about 20%, to about 90%, or to about 60%, or to about 55%, or to about 30%, of the total content of the carboxylic acid groups present in the ethylene acid copolymer are neutralized. In another alternative expression, the acid groups are neutralized to a level of about 1%, or about 10%, or about 15%, or about 20%, to about 90%, or to about 60%, or to about 55%, or to about 30%, based on the total content of carboxylic acid groups present in the ethylene acid copolymers as calculated or measured for the non-neutralized ethylene acid copolymers. The neutralization level can be tailored for the specific end-use.

The ionomers comprise cations as counterions to the carboxylate anions. Suitable cations include any positively charged species that is stable under the conditions in which the ionomer composition is synthesized, processed and used. Suitable cations may be used in combinations of two or more. In some preferred ionomers, the cations are metal cations, which may be monovalent, divalent, trivalent, or multivalent. Useful monovalent metal cations include but are not limited to cations of sodium, potassium, lithium, silver, mercury, copper, and the like. Useful divalent metal cations include but are not limited to cations of beryllium, magnesium, calcium, strontium, barium, copper, cadmium, mercury, tin, lead, iron, cobalt, nickel, zinc, and the like. Useful trivalent metal cations include but are not limited to cations of aluminum, scandium, iron, yttrium, and the like. Useful multivalent metal cations include but are not limited to cations of titanium, zirconium, hafnium, vanadium, tantalum, tungsten, chromium, cerium, iron, and the like. When the metal cation is multivalent, complexing agents such as stearate, oleate, salicylate, and phenolate radicals may be included, as described in US3404134. In another preferred composition, the metal cations used are monovalent or divalent metal cations. Preferred metal cations are sodium, lithium, magnesium, zinc, potassium, and combinations of one or more of these metal cations. In a more preferred composition, the cations are sodium cations, magnesium cations, zinc cations and combinations thereof.

The resulting neutralized ionomer has a melt index, as determined in accordance with ASTM method D1238-89 at 190°C and 2.16 kg, that is lower than that of the corresponding ethylene acid copolymer. The ionomer's melt index depends on a number of factors, including the melt index of the ethylene acid copolymer, the amount of copolymerized acid, the neutralization level, the identity of the cation and its valency. Moreover, the desired value of the ionomer's melt index may be determined by its intended end use. Preferably, however, the ionomer has a melt index of about 1000 g/10 min or less, or about 750 g/10 min or less, or about 500 g/10 min or less, or about 250 g/10 min or less, or about 100 g/10 min or less, or about 50 g/10 min or less, or about 25 g/10 min or less, or about of 20 g/10 min or less, or about 10 g/10 min or less, or about 7.5 g/10 min or less, as determined in accordance with ASTM method D1238-89 at 190°C and 2.16 kg.

In one embodiment, the ionomer is a terpolymer ionomer, which is an at least partially neutralized ethylene acid copolymer preferably comprising copolymerized units of:
(i) ethylene,
(ii) from about 10wt%, or from about 15 wt%, or from about 18 wt%, or from about 20 wt%, to about 30 wt%, or to about 25 wt%, or to about 23 wt% or to about 22 wt%, of at least one α,β-unsaturated carboxylic acid having 3 to 10 carbon atoms,
(iii) from about 2 wt%, or from about 3 wt%, or from about 4 wt%, or from about 5 wt%, to about 15 wt%, or to about 12 wt%, or to about 11 wt%, or to about 10 wt%, of at least one α,β-unsaturated carboxylic acid ester having 3 to 10 carbon atoms, and
(iv) optionally a derivative of an α,β-unsaturated carboxylic acid other than (iii) in an amount such that (iii) + (iv) is about 15 wt% or less, or about 12 wt% or less, or about 11 wt% or less,
wherein the weight percentages of the copolymerized units are based on the total weight of the ethylene acid copolymer and the sum of the weight percentages of the copolymerized units is 100 wt%, and wherein at least a portion of carboxylic acid groups of the α,β-unsaturated carboxylic acid are neutralized to form an ionomer comprising carboxylate groups having counterions.

Such terpolymer ionomers are generally disclosed in WO2015/199750A1 and WO2014/100313A1, as well as in previously mentioned US Patent Application Ser. No. 15/588,986 (filed 8 May 2017) (claiming priority from US Provisional Application Ser. No. 62/333,371 (filed 9 May 2016)).

### Additives

Other than plasticizers, typical additives for the various layers of the multilayer laminates include an antioxidant, an ultraviolet ray absorber, a photostabilizer, an antiblocking agent, a pigment, a dye, a heat shielding material (infrared ray absorber), an adhesion modifier and the like, or mixtures thereof.

In an embodiment of the present invention, skin layer A includes an antioxidant, an ultraviolet ray absorber, a photostabilizer, an antiblocking agent, a pigment, a dye, a heat shielding material, an adhesion modifier and the like, or mixtures thereof.

In an embodiment of the present invention, skin layer C includes an antioxidant, an ultraviolet ray absorber, a photostabilizer, an antiblocking agent, a pigment, a dye, a heat shielding material, an adhesion modifier and the like, or mixtures thereof.

In an embodiment of the present invention, interior layer B includes an antioxidant, an ultraviolet ray absorber, a photostabilizer, an antiblocking agent, a pigment, a dye, a heat shielding material, an adhesion modifier and the like, or mixtures thereof.

In an embodiment of the present invention, the wedge-shaped film includes an antioxidant, an ultraviolet ray absorber, a photostabilizer, an antiblocking agent, a pigment, a dye, a heat shielding material, an adhesion modifier and the like, or mixtures thereof.

In an embodiment of the present invention, an antioxidant, an ultraviolet ray absorber, a photostabilizer, an antiblocking agent, a pigment, a dye, a heat shielding material, an adhesion modifier and the like, or mixtures thereof is present in at least two of skin layer A, skin layer C, interior layer B, and wedge-shaped film.

In an embodiment of the present invention, an antioxidant, an ultraviolet ray absorber, a photostabilizer, an antiblocking agent, a pigment, a dye, a heat shielding material, an adhesion modifier and the like, or mixtures thereof is present in at least three of skin layer A, skin layer C, interior layer B, and wedge-shaped film.

In an embodiment of the present invention, an antioxidant, an ultraviolet ray absorber, a photostabilizer, an antiblocking agent, a pigment, a dye, a heat shielding material, an adhesion modifier and the like, or mixtures thereof is present in each of skin layer A, skin layer C, interior layer B, and wedge-shaped film.

Where an additive(s) is present in more than one layer, it is envisioned within the scope of the present invention that the type, composition, and/or concentrations of the additive(s) is independently present in each layer containing the same such that the type, composition, and/or concentrations of the additive(s) may or may not be the same as in any other layer. For example, layer A, layer C and the wedge-shaped film may have the same type, composition, and/or concentrations of the additive(s), while layer B has a different type, composition, and/or concentrations of the additive(s). Similarly, layer A and/or layer B may have the same type, composition, and/or concentrations of the additive(s), while layer C and/or the wedge-shaped film has a different type, composition, and/or concentrations of the additive(s). Of course, the foregoing is merely illustrative and not restrictive as the present invention envisions similar arrangements for the various combinations of layer A, layer B, layer C, and the wedge-shaped film.

Examples of the antioxidant include phenol-based antioxidants, phosphorus-based antioxidants, sulfur-based antioxidants, and the like. Of those, phenol-based antioxidants are preferred, and alkyl-substituted phenol-based antioxidants are especially preferred.

Examples of the phenol-based antioxidant include acrylate-based compounds, such as 2-t-butyl-6-(3-t-butyl-2-hydroxy-5-methylbenzyl)-4-methylphenyl acrylate and 2,4-di-t-amyl-6-(1-(3,5-di-t-amyl-2-hydroxyphenyl)ethyl)phenyl acrylate; alkyl-substituted phenol-based compounds, such as 2,6-di-t-butyl-4-methylphenol, 2,6-di-t-butyl-4-ethylphenol, octadecyl-3-(3,5-di-t-butyl-4-hydroxyphenyl)propionate, 2,2'-methylene-bis(4-methyl-6-t-butylphenol), 4,4'-butylidene-bis(4-methyl-6-t-butylphenol), 4,4'-butylidene-bis(6-t-butyl-m-cresol), 4,4'-thiobis(3-methyl-6-t-butylphenol), bis(3-cyclohexyl-2-hydroxy-5-methylphenyl)methane, 3,9-bis(2-(3-(3-t-butyl-4-hydroxy-5-methylphenyl)propionyloxy)-1,1-dimethylethyl)-2,4,8,10-tetraoxaspiro[5.5]undecane, 1,1,3-trix(2-methyl-4-hydroxy-5-t-butylphenyl)butane, 1,3,5-trimethyl-2,4,6-tris(3,5-di-t-butyl-4-hydroxybenzyl)benzene, tetrakis(methylene-3-(3',5'-di-t-butyl-4'-hydroxyphenyl)propionate)methane and triethylene glycol bis(3-(3-t-butyl-4-hydroxy-5-methylphenyl)propionate); triazine group-containing phenol-based compounds, such as 1,3,5-tris(2,6-dimethyl-3-hydroxy-4-t-butylbenzyl)-1,3,5-triazine-2,4,6(1H,3H,5H)-trione, 6-(4-hydroxy-3,5-di-t-butylanilino)-2,4-bis-octylthio-1,3,5-triazine, 6-(4-hydroxy-3,5-dimethylanilino)-2,4-bis-octylthio-1,3,5-triazine, 6-(4-hydroxy-3-methyl-5-t-butylanilino)-2,4-bis-octylthio-1,3,5-triazine and 2-octylthio-4,6-bis-(3,5-di-t-butyl-4-oxyanilino)-1,3,5-triazine; and the like.

Examples of the phosphorus-based antioxidant include monophosphite-based compounds, such as triphenyl phosphite, diphenylisodecyl phosphite, phenyldiisodecyl phosphite, tris(nonylphenyl) phosphite, tris(dinonylphenyl) phosphite, tris(2-t-butyl-4-methylphenyl) phosphite, tris(2,4-di-t-butyl) phosphite, tris(cyclohexylphenyl) phosphite, 2,2-methylenebis(4,6-di-t-butylphenyl)octyl phosphite, 9,10-dihydro-9-oxa-10-phosphaphenanthrene-10-oxide, 10-(3,5-di-t-butyl-4-hydroxybenzyl)-9,10-dihydro-9-oxa-10-phosphaphenanthrene-10-oxide and 10-decyloxy-9,10-dihydro-9-oxa-10-phosphaphenanthrene.; diphosphite-based compounds, such as 4,4'-butylidene-bis(3-methyl-6-t-butylphenyl-di-tridecylphosphite), 4,4'-isopropylidene-bis(phenyl-di-alkyl(C12-C15) phosphite), 4,4'-isopropylidene-bis(diphenylmonoalkyl(C12-C15)phosphite), 1,1,3-tris(2-methyl-4-di-tridecylphosphite-5-t-butylphenyl)butane and tetrakis(2,4-di-t-butylphenyl)-4,4'-biphenylene phosphite; and the like. Of those, monophosphite-based compounds are preferred.

Examples of the sulfur-based antioxidant include dilauryl 3,3'-thiodipropionate, distearyl 3,3-thiodipropionate, lauryl stearyl 3,3'-thiodipropionate, pentaerythritol-tetrakis-(β-lauryl-thiopropionate), 3,9-bis(2-dodecylthioethyl)-2,4,8,10-tetraoxaspiro[5.5]undecane, and the like.

These antioxidants can be used solely or in combination of two or more thereof. The antioxidant utilized is typically about 0.001 parts by mass or more, or about 0.01 parts by mass or more, based on 100 parts by mass of the thermoplastic resin/elastomer. In addition, the amount of antioxidant utilized is typically about 5 parts by mass or less, or about 1 part by mass or less, based on 100 parts by mass of the thermoplastic resin/elastomer. When the amount of the antioxidant is smaller than about 0.001 parts by mass, there is a concern that the sufficient effects are hardly exhibited, whereas even when it is more than about 5 parts by mass, remarkable effects are not expected.

In addition, examples of the ultraviolet ray absorber include benzotriazole-based ultraviolet ray absorbers, such as 2-(5-methyl-2-hydroxyphenyl)benzotriazole, 2-[2-hydroxy-3,5-bis(α,α'-dimethylbenzyl)phenyl]-2H-benzotriazole, 2-(3,5-di-t-butyl-2-hydroxyphenyl)benzotriazole, 2-(3-t-butyl-5-methyl-2-hydroxyphenyl)-5-chlorobenzotriazole, 2-(3,5-di-t-butyl-5-methyl-2-hydroxyphenyl)-5-chlorobenzotriazole and 2-(3,5-di-t-amyl-2-hydroxyphenyl)benzotriazole, 2-(2'-hydroxy-5'-t-octylphenyl)triazole.; hindered amine-based ultraviolet ray absorbers, such as 2,2,6,6-tetramethyl-4-piperidyl benzoate, bis(2,2,6,6-tetramethyl-4-piperidyl)sebacate, bis(1,2,2,6,6-pentamethyl-4-piperidyl)-2-(3,5-di-t-butyl-4-hydroxybenzyl)-2-n-butylmalonate and 4-(3-(3,5-di-t-butyl-4-hydroxyphenyl)propionyloxy)-1-(2-(3-(3,5-di-t-butyl-4-hydroxyphenyl)propionyloxy)ethyl)-2,2,6,6-tetramethylpiperidine; benzoate-based ultraviolet ray absorbers, such as 2,4-di-t-butylphenyl-3,5-di-t-butyl-4-hydroxybenzoate and hexadecyl-3,5-di-t-butyl-4-hydroxybenzoate; and the like.

These ultraviolet ray absorbers can be used solely or in combination of two or more thereof. The amount of ultraviolet ray absorber utilized is typically about 10 ppm or more, or about 100 ppm or more, on the basis of a mass relative to the thermoplastic resin/elastomer. In addition, the amount of ultraviolet ray absorber utilized is typically about 50,000 ppm or less, or about 10,000 ppm or less, on the basis of a mass relative to the thermoplastic resin/elastomer. When the amount of the ultraviolet ray absorber is smaller than about 10 ppm, there is a concern that the sufficient effects are hardly exhibited, whereas even when the addition amount of the ultraviolet ray absorber is more than about 50,000 ppm, remarkable effects are not expected.

In some embodiments, it is also possible to use two or more types of UV absorbers in combination.

In other embodiments, no UV absorber is added, or the laminate is substantially UV absorber additive free.

Examples of the photostabilizer include hindered amine-based materials, such as "ADEKA STAB LA-57" (a trade name) manufactured by Adeka Corporation, and "TINUVIN 622" (a trade name) manufactured by Ciba Specialty Chemicals Inc.

In addition, it is also possible to control the adhesion of the resulting laminate to a glass or the like, if desired.

Typical adhesion modifiers include, for example, those disclosed in WO03/033583A1 can be used. Alkali metal salts and alkaline earth metal salts are typically used, for example, salts of potassium, sodium, magnesium, and the like. Examples of the salt include salts of organic acids, such as octanoic acid, hexanoic acid, butyric acid, acetic acid and formic acid; inorganic acids, such as hydrochloric acid and nitric acid; and the like.

Silanes such as disclosed in US20100108125A1 and US20110105681A1 may also be used as adhesion modifiers.

Reactive functional group-containing olefinic polymers wherein the functional group is at least one group selected from a carboxyl group and a derivative group of a carboxyl group (herein below, referred to as carboxylic group) (herein below, referred to as a carboxylic group-containing olefinic polymer) can also be used as adhesion modifiers. Suitable carboxylic group-containing olefinic polymers are disclosed, for example, in US7989083B2.

Though an optimal addition amount of the adhesion modifier varies with the additive to be used and the resin to be adhesion modified, it is preferably adjusted in such a manner that an adhesive force of the resulting laminate to a glass is generally adjusted to about 3 or more and about 10 or less in a pummel test (described in WO03/033583A1 or the like). In particular, in the case where high penetration resistance is required, the addition amount of the adhesion modifier is more preferably adjusted in such a manner that the adhesive force is about 3 or more and about 6 or less, whereas in the case where high glass scattering preventing properties are required, the addition amount of the adhesion modifier is more preferably adjusted in such a manner that the adhesive force is about 7 or more and about 10 or less.

When a laminated glass is prepared by incorporating a heat-shielding fine particle or a heat-shielding compound as the heat-shielding material into the interlayer of the present invention to give a heat-shielding function to the laminate, a transmittance at a wavelength of 1,500 nm can be regulated to about 50% or less, or the TDS value (calculated from ISO 13837:2008) can be regulated to less than about 43%. The heat-shielding material may be contained in any of the layers A, B, C, the wedge-shaped film and/or another layer, if desired. The heat shielding material may be contained in only one of the layers, or may be contained in the plural layers.

Examples of the heat-shielding fine particle include a metal-doped indium oxide, such as tin-doped indium oxide (ITO), a metal-doped tin oxide, such as antimony-doped tin oxide (ATO), a metal-doped zinc oxide, such as aluminum-doped zinc oxide (AZO), a metal element composite tungsten oxide represented by a general formula: MₘWOₙ (M represents a metal element; m is about 0.01 or more and about 1.0 or less; and n is about 2.2 or more and about 3.0 or less), zinc antimonate (ZnSb₂O₅), lanthanum hexaboride, and the like. Of those, ITO, ATO, and a metal element composite tungsten oxide are preferred, and a metal element composite tungsten oxide is more preferred. Examples of the metal element represented by M in the metal element composite tungsten oxide include Cs, Tl, Rb, Na, K, and the like, and in particular, Cs is preferred. From the viewpoint of heat shielding properties, m is preferably about 0.2 or more, or about 0.3 or more, and it is preferably about 0.5 or less, or about 0.4 or less.

A content of the heat shielding fine particle is preferably about 0.01% by mass or more, or about 0.05% by mass or more, or about 0.1% by mass or more, or about 0.2% by mass or more relative to the whole of the resins used for the layers constituting the laminate. In addition, the content of the heat shielding fine particle is preferably about 5% by mass or less, or about 3% by mass or less. When the content of the heat shielding fine particle is more than about 5% by mass, there is a concern that the transmittance of visible rays is influenced. From the viewpoint of transparency of the laminate, an average particle diameter of the heat shielding fine particle is preferably about 100 nm or less, or about 50 nm or less. It is to be noted that the average particle diameter of the heat shielding particle as referred to herein means one measured by a laser diffraction instrument.

Examples of the heat shielding compound include phthalocyanine compounds, naphthalocyanine compounds, and the like. From the viewpoint of further improving the heat shielding properties, it is preferred that the heat shielding compound contains a metal. Examples of the metal include Na, K, Li, Cu, Zn, Fe, Co, Ni, Ru, Rh, Pd, Pt, Mn, Sn, V, Ca, Al, and the like, with Ni being especially preferred.

A content of the heat shielding compound is preferably about 0.001% by mass or more, or about 0.005% by mass or more, or about 0.01% by mass or more relative to the whole of the resins used for the layers constituting the laminate. In addition, the content of the heat shielding compound is preferably about 1% by mass or less, or about 0.5% by mass or less. When the content of the heat shielding compound is more than about 1% by mass, there is a concern that the transmittance of visible rays is influenced.

### Multilayer Interlayer Production and Properties

A production method of the multilayer interlayer of the present invention is not particularly limited, and the interlayer may be produced by a method in which after uniformly kneading the resin composition constituting the layer B, the layer B is prepared by a known film formation method, such as an extrusion method, a calender method, a pressing method, a casting method and an inflation method, the layers A and C are prepared with the resin by the same method, and these layers may be laminated by means of press molding or the like, or the layer B, and the layers A and C, and other necessary layers, may be molded by a co-extrusion method.

Independently, the wedge-shaped film having the desired thickness variation as defined herein above can be prepared by a known film formation method, such as an extrusion method, a calender method, a pressing method, a casting method and an inflation method. The wedge-shaped film is then laminated independently onto the integrated multilayer sheet containing at least layers A - C as described above. For a co-extruded integrated multilayer sheet, the wedge-shaped film can be laminated at the same time as the co-extruded integrated multilayer sheet is produced.

Preferably, to ensure that their thickness (i.e., the thickness of layer B) and the total thickness are individually substantially consistent throughout the length and width of the integrated multilayer sheet, in a preferred embodiment of the present invention layers A - C are coextruded.

Among the known film formation methods, in particular, a method of producing a integrated multilayer sheet using a co-extrusion machine is suitably adopted. A resin temperature at the time of extrusion is preferably about 150°C or higher, or about 170°C or higher. In addition, the resin temperature at the time of extrusion is preferably about 250°C or lower, or about 230°C or lower. When the resin temperature is too high, there is a concern that the used resin causes decomposition, thereby deteriorating the resin. Conversely, when the temperature is too low, discharge from the extrusion machine is not stabilized, resulting in causing a mechanical trouble. In order to efficiently remove a volatile material, it is preferred to remove the volatile material by measure of pressure reduction from a vent port of the extrusion machine.

When layer B is an acoustic-damping layer, a film thickness of the layer B is typically about 20 µm or more, or about 25 µm or more, or about 30 µm or more, or about 50 µm or more, or about 100 µm or more. In addition, the film thickness of the layer B is typically about 500 µm or less, or about 400 µm or less, or about 300 µm or less. When the film thickness of the layer B is less than about 20 µm, the sound insulating properties tend to be lowered, whereas when the film thickness of the layer B is more than about 400 µm, there is a tendency that when a laminated glass is prepared, mechanical characteristics, such as penetration resistance, are deteriorated, so that a safety performance as a laminated glass is impaired. In the case where a plurality of the layers B is included in the laminate of the present invention, it is preferred that a total thickness of the entirety of the layer B satisfies the foregoing range.

In an acoustic-damping interlayer where layers A and C provide the predominant portion of the structural integrity, a film thickness of the layer A and/or C is preferably about 100 µm or more, or about 150 µm or more, or about 200 µm or more. The film thickness of the layer A and/or C is preferably about 650 µm or less, or about 500 µm or less, or about 350 µm or less, or about 300 µm or less. When the film thickness of the layer A and/or C is less than about 100 µm, there is a tendency that the flexural rigidity of the laminate is small, so that the sound insulating properties in a high-frequency region are lowered, whereas when the film thickness of the layer A and/or C is more than about 650 µm, there is a tendency that the sound insulating properties are lowered regardless of the frequency region, or a time-dependent change of sound insulating performance is liable to be caused, so that the stability of sound insulating performance is lowered.

A total thickness of the combination of the layers A and C is preferably about 300 µm or more, or about 400 µm or more, or about 500 µm or more, or about 600 µm or more. The total thickness of the combination of the layers A and C is preferably about 750 µm or less, or about 720 µm or less, or about 700 µm or less. When the total thickness of the combination of the layers A and C is about 300 µm or more, the flexural strength of the laminate tends to become large, whereas when the total thickness of the combination of the layers A and C about 750 µm or less, the moldability is improved, so that the resulting laminate is liable to be wound up by a roll.

A ratio of the total thickness of the acoustic layer(s) (layer B for example) to the total thickness of the skin layers (A and C for example) ((total thickness of the layer B)/(total thickness of the layer A+C)) is preferably about 1/1 or less, or about 1/2 or less, or about 1/3 or less. The ratio of the total thickness of the layer B to the total thickness of the layers A+C is preferably about 1/30 or more, or about 1/15 or more, or about 1/6.5 or more, or about 1/5 or more. When the above-described ratio is smaller than about 1/30, the sound insulating effect of the laminate tends to become small. On the other hand, when the above-described ratio is more than about 1/1, there is a tendency that the flexural rigidity of the laminate becomes small, the sound insulating properties in a high-frequency region are lowered, a time-dependent change of sound insulating performance is liable to be caused, so that the stability of sound insulating performance is lowered, or the shear storage modulus of the laminate is lowered, so that the flexural strength of the laminate is lowered.

The wedge-shaped film has a varying thickness from the thicker first edge to the thinner second edge, with a variance as defined above. The thickness at the thicker first edge is generally about 380 µm or more, or about 570 µm or more, to about 760 µm or less. The thickness at the thinner second edge is generally less than 760 µm, or about 570 µm or less, and can be readily calculated based on the desired wedge angle and configuration.

The multilayer interlayer of the present invention will generally have a constitution as set forth in the exemplary illustrative embodiments of Figs. 5 and 6. In the present invention, the first skin layer A has a first thickness as described above, the second skin layer C has a second thickness as described above, and interior layer B has a third thickness as described above. In the final multilayer interlayer structure, each of the third thickness and the total thickness is individually substantially consistent throughout the length and width of the integrated multilayer sheet. In one embodiment of the present invention, the first and/or second thickness is also individually substantially consistent throughout the length and width of the integrated multilayer sheet.

The multilayer interlayer is wedge-shaped having a thicker first edge and a thinner second edge. The thicker first edge has a thickness of about 1850 µm or less, or about 1600 µm or less, or about 1520 µm or less, or about 1330 µm or less, or about 1140 µm or less. The thinner second edge has a thickness of about 600 µm or more, or about 700 µm or more, or about 760 µm or more. As indicated previously, the integrated multilayer sheet forms the predominant portion of the thickness at both the thicker first edge and thinner second edge.

Of course, the use of thicker and thinner to describe the edges precludes the situation where the thickness at both edges are equal. Generally, the difference between the thickness at the thicker and thinner edge will vary based upon the wedge angle and the overall dimensions (e.g., length and width of the multilayer interlayer).

Generally, the integrated multilayer laminate used in the context of the present invention has a lamination constitution in which a layer B is interposed between layer A and layer C. Though the lamination constitution in the laminate is determined depending upon the purpose, it may be, in addition to the lamination constitution of (layer A)/(layer B)/(layer C), a lamination constitution of (layer A)/(layer B)/(layer C)/(layer B)/(layer C), (layer A)/(layer B)/(layer A)/(layer B)/(layer C), or (layer A)/(layer B1)/(layer B2)/(layer C).

One or more additional types of layers may also be included as a layer (referred to as "layer D") other than the layers A, B and C. For example, lamination constitutions, such as (layer A)/(layer B)/(layer D)/(layer C), (layer A)/(layer B)/(layer C)/(layer D), (layer A)/(layer D)/(layer B)/(layer D)/(layer C), (layer A)/(layer D)/(layer B)/(layer C)/(layer D), (layer A)/(layer B)/(layer D)/(layer C)/(layer D), (layer D)/(layer A)/(layer B)/(layer C)/(layer D), (layer D)/(layer A)/(layer B)/(layer D)/(layer C)/(layer D), (layer D)/(layer A)/(layer D)/(layer B)/(layer D)/(layer C)/(layer D), may be adopted. In addition, in the above-described lamination constitution, the components in the layer D may be identical with or different from each other. This is also applicable to the components in the layers A, B or C.

In each of the configurations above, the wedge-shaped film is either directly or indirectly in contact with layer A of the integrated multilayer sheet. In this context, "directly" means that the wedge-shaped film is in intimate physical contact with layer A, while "indirectly" that there is an additional intermediate layer (layer D) between the wedge-shaped film and layer A.

It is to be noted that a layer composed of a known resin is usable as the layer D. For example, polyethylene, polypropylene, polyvinyl chloride, polystyrene, polyvinyl acetate, polyurethane, polytetrafluoroethylene, an acrylic resin, a polyamide, a polyacetal, a polycarbonate, a polyester inclusive of polyethylene terephthalate and polybutylene terephthalate, a cyclic polyolefin, polyphenylene sulfide, polytetrafluoroethylene, a polysulfone, a polyether sulfone, a polyarylate, a liquid crystal polymer, a polyimide, a polyvinyl acetal (such as polyvinyl butyral) and the like can be used.

In addition, in the layer D, a plasticizer, an antioxidant, an ultraviolet ray absorber, a photostabilizer, an antiblocking agent, a pigment, a dye, a heat-shielding material (for example, an inorganic heat-shielding fine particle, an organic heat-shielding material each having infrared absorption ability) and/or an adhesion promotor, and the like may also be added, if desired.

In addition, it is desirable that a concave and convex structure, such as a melt fracture and/or an embossing, is formed on the surface of the interlayer of the present invention by a conventionally known method. A shape of the melt fracture or embossing is not particularly limited, and those which are conventionally known can be adopted.

Preferably, at least one surface (and more preferably both surfaces) of the multilayer interlayer for a laminated glass is shaped. By shaping at least one surface of the multilayer interlayer for a laminated glass, in the case where a laminated glass is produced, an air bubble present at an interface between the interlayer for a laminated glass and a glass easily escapes to the outside of the laminated glass, and thus, the appearance of the laminated glass can be made favorable. It is preferred to shape at least one surface of the interlayer for a laminated glass by an embossing roll method, melt fracture, or the like. By shaping the surface of the multilayer interlayer for a laminated glass, a concave portion and/or a convex portion are/is formed on the surface of the interlayer for a laminated glass.

Examples of a method for shaping the surface of the multilayer interlayer for a laminated glass include a conventionally known embossing roll method, a profile extrusion method, and an extrusion lip embossing method utilizing melt fracture. Among these, an embossing roll method is preferred for stably obtaining the interlayer for a laminated glass having uniform and fine concave and convex portions formed thereon.

An embossing roll to be used in the embossing roll method can be produced by, for example, using an engraving mill (mother mill) having a desired concave-convex pattern and transferring the concave-convex pattern to the surface of a metal roll. Further, an embossing roll can also be produced using laser etching. Further, after forming a fine concave-convex pattern on the surface of a metal roll as described above, the surface with the fine concave-convex pattern is subjected to a blast treatment using an abrasive material such as aluminum oxide, silicon oxide, or glass beads, whereby a finer concave-convex pattern can also be formed.

Further, the embossing roll to be used in the embossing roll method is preferably subjected to a release treatment. In the case where an embossing roll which is not subjected to a release treatment is used, it becomes difficult to release the interlayer for a laminated glass from the embossing roll. Examples of a method for the release treatment include known methods such as a silicone treatment, a Teflon (registered trademark) treatment, and a plasma treatment.

The depth of the concave portion and/or the height of the convex portion (hereinafter sometimes referred to as "the height of the embossed portion") of the surface of the interlayer for a laminated glass shaped by an embossing roll method or the like are/is preferably about 5 µm or more, or about 10 µm or more, or about 20 µm or more. When the height of the embossed portion is about 5 µm or more, in the case where a laminated glass is produced, an air bubble present at an interface between the interlayer for a laminated glass and a glass is less likely to remain, and thus, the appearance of the laminated glass tends to be improved.

The height of the embossed portion is preferably about 150 µm or less, or about 100 µm or less, or about 80 µm or less. When the height of the embossed portion is about 150 µm or less, in the case where a laminated glass is produced, the adhesiveness between the interlayer for a laminated glass and a glass becomes favorable, and thus, the appearance of the laminated glass tends to be improved.

In the invention, the height of the embossed portion refers to a maximum height roughness (Rz) defined in JIS B 0601 (2001). The height of the embossed portion can be measured by, for example, utilizing the confocal principle of a laser microscope or the like. Incidentally, the height of the embossed portion, that is, the depth of the concave portion or the height of the convex portion may vary within a range that does not depart from the gist of the invention.

Examples of the form of the shape imparted by an embossing roll method or the like include a lattice, an oblique lattice, an oblique ellipse, an ellipse, an oblique groove, and a groove. Among these, the form is preferably an oblique lattice, an oblique groove, or the like from the viewpoint that an air bubble more favorably escapes. The inclination angle is preferably from 10° to 80° with respect to the film flow direction (MD direction).

The shaping by an embossing roll method or the like may be performed on one surface of the interlayer for a laminated glass, or may be performed on both surfaces, but is more preferably performed on both surfaces. Further, the shaping pattern may be a regular pattern or an irregular pattern such as a random matte pattern, or a pattern such as disclosed in US7351468B2, US7883761B2 and/or US20150174862A1.

### Laminate

The laminate of the present invention is composed of a multilayer interlayer in which one or more layers B having the above-described properties is interposed between the at least two skin layers A and C having the above-described properties, wherein a wedge-shaped film is in placed between skin layer A and an exterior sheet and skin layer C is in direct or indirect contact with a second exterior sheet. By taking such a constitution, a laminate with excellent sound insulating properties, flexural strength, stiffness and optical properties, and desirably also solar heat-shielding properties, can be obtained from such interlayer.

Thus, in the present invention, a laminate is provided having a first exterior sheet and a second exterior sheet having interposed therebetween a multilayer interlayer as described above.

In the laminate of the present invention, the first exterior sheet is in direct or indirect contact with the outer edge of the wedge-shaped film. In a preferred embodiment, the first exterior sheet is in direct contact with the outer edge of the wedge-shaped film.

In the laminate of the present invention, the second exterior sheet is in direct or indirect contact with the outside edge of the second skin layer C. In a preferred embodiment, the second exterior sheet is in direct contact with the outside edge of the second skin layer C.

The first and second exterior sheets can each individually be a rigid inorganic material such as glass, or rigid organic material such as polycarbonate.

The glass to be used on the occasion of preparing a laminated glass is not particularly limited. Inorganic glasses, such as a float sheet glass, a polished sheet glass, a figured glass, a wired sheet glass, a heat-ray absorbing glass, and besides, conventionally known organic glasses, such as polymethyl methacrylate and polycarbonate, and the like can be used. These glasses may be any of colorless, colored, transparent, or non-transparent glasses. These glasses may be used solely, or may be used in combination of two or more thereof.

When the constitution of the multilayer interlayer of the present invention is included in the inside of a glass, it is possible to obtain a laminated glass with excellent flexural strength, a laminated glass with excellent sound insulating properties, particularly sound insulating properties in a high-frequency region, a laminated glass with excellent sound insulating properties and stability of sound insulating performance, and a laminated glass with excellent sound insulating properties over a broad temperature range.

For that reason, the laminated glass of the present invention can be suitably a transportation glass, e.g., for a windshield for automobile, a side glass for automobile, a sunroof for automobile, a rear glass for automobile, or a glass for head-up display; a building member for a window, a wall, a roof, a sunroof, a sound insulating wall, a display window, a balcony, a handrail wall, or the like; a partition glass member of a conference room; and the like.

In the case where the laminated glass including the constitution of the laminate of the present invention in the inside thereof is applied to a glass for head-up display, a cross-sectional shape of the laminate to be used is preferably a shape in which an end surface side of one side is thick, whereas an end surface side of the other side is thin. In that case, the cross-sectional shape may be a shape in which the whole is a wedge shape in such a manner that it becomes gradually thin from the end surface side of one side toward the end surface side of the other side, or may be a shape in which a part of the cross section is a wedge shape such that the thickness is identical until an arbitrary position between the end surface of one side and the end surface of the other side, and it becomes gradually thin from the foregoing arbitrary position toward the end surface of the other side.

In general, two sheets of glass are used for the laminated glass of the present invention. Though a thickness of the glass constituting the laminated glass of the present invention is not particularly limited, it is preferably about 100 mm or less, about 80 mm or less, about 65 mm or less, about 50 mm or less, about 35 mm or less, about 25 mm or less, about 15 mm or less, about 10 mm or less, 5 mm or less, or 2.5 mm or less. The lower limit of the thickness of the glass constituting the laminated glass of the present invention is not particularly limited, and is generally about 0.7 mm or more.

In the present invention, the first and second exterior sheets can be of the same type of glass or may be different types of glass.

In the present invention, the first and second exterior sheets can be of the same thickness, substantially the same thickness, or of a different thickness.

Since the laminate of the present invention is excellent in flexural strength and stiffness, even when a laminated glass is prepared by using a thin sheet glass having a thickness of about 2.8 mm or less, weight reduction of the laminated glass can be realized without impairing the strength or flexibility of the laminated glass.

From the viewpoint of weight reduction, with respect to the thickness of the glass, a thickness of at least one sheet of glass is preferably about 2.8 mm or less, or about 2.5 mm or less, or about 2.0 mm or less, or about 1.8 mm or less. In particular, by regulating a thickness of the glass of one side to about 1.8 mm or more, regulating a thickness of the glass of the other side to about 1.8 mm or less, and regulating a difference in thickness between the respective glasses to about 0.2 mm or more, a laminated glass in which thinning and weight reduction have been realized without impairing the flexural strength can be prepared.

Where there is a difference in the thickness of the first and second exterior sheets, e.g., glass, the difference in thickness between the sheets is preferably about 0.05 mm or more, about 0.1 mm or more, about 0.15 mm or more, about 0.2 mm or more, about 0.25 mm or more, about 0.3 mm or more, about 0.4 mm or more, about 0.5 mm or more to about 5 mm or less, about 4.5 mm or less, about 4.0 mm or less, about 3.5 mm or less, about 3 mm or less, about 2.5 mm or less, about 2 mm or less, about 1.5 mm or less, or about 1.0 mm or less.

In terms of light weighting, in one embodiment a laminated glass in accordance with the invention has a mass (areal density) of about 10 kg/m² or less, or about 9.5 kg/m² or less, or or to about 9 kg/m² or less. In another embodiment a laminated glass in accordance with the invention has a mass in the range of from about 7 kg/m², or from about 7.5 kg/m², or from about 8 kg/m², to about 10 kg/m², or to about 9.5 kg/m², or to about 9 kg/m².

### Production Method of a Laminate

It is possible to produce a laminates of the present invention by a conventionally known method. Examples thereof include a method of using a vacuum laminator, a method of using a vacuum bag, a method of using a vacuum ring, a method of using a nip roll, and the like. In addition, a method can be used in which, after temporary contact bonding, the resultant laminate is put into an autoclave for final bonding.

In the case of using a vacuum laminator, for example, a known instrument which is used for production of a solar cell is used, and the assembly is laminated under a reduced pressure of about 1 × 10⁻⁶ MPa or more and about 3 × 10⁻² MPa or less at a temperature of about 100°C or higher, or about 130°C or higher, and about 200°C or lower, or about 170°C or lower. The method of using a vacuum bag or a vacuum ring is, for example, described in the specification of EP1235683A1 (CA2388107A1), and for example, the assembly is laminated under a pressure of about 2 × 10⁻² MPa at about 130°C or higher and about 145°C or lower.

With respect to the preparation method of a laminated glass, in the case of using a nip roll, for example, there is exemplified a method in which after conducting first temporary contact bonding at a temperature of a flow starting temperature of the skin resin or lower, temporary contact bonding is further conducted under a condition close to the flow starting temperature. Specifically, for example, there is exemplified a method in which the assembly is heated at about 30°C or higher and about 100°C or lower by an infrared heater or the like, then deaerated by a roll, and further heated at about 50°C or higher and about 150°C or lower, followed by conducting contact bonding by a roll to achieve bonding or temporary bonding.

Though the autoclave process which is supplementarily conducted after the temporary contact bonding is variable depending upon the thickness or constitution of a module, it is, for example, carried out under a pressure of about 1 MPa or more and about 15 MPa or less at a temperature of about 120°C or higher and about 160°C or lower for about 0.5 hours or more and about 2 hours or less.

The glass to be used on the occasion of preparing a laminated glass is not particularly limited. Inorganic glasses, such as a float sheet glass, a polished sheet glass, a figured glass, a wired sheet glass, a heat-ray absorbing glass, and besides, conventionally known organic glasses, such as polymethyl methacrylate and polycarbonate, and the like can be used. These glasses may be any of colorless, colored, transparent, or non-transparent glasses. These glasses may be used solely, or may be used in combination of two or more thereof.

## Claims

1. A multilayer interlayer comprising:
an integrated multilayer sheet having a length, a width and a total thickness, comprising:
(a) a first skin layer A which is a layer of a first thermoplastic resin optionally containing one or more additives, the first skin layer having an exterior side, an interior side and a first thickness,
(b) a second skin layer C which is a layer of a second thermoplastic resin optionally containing one or more additives, the second skin layer having an exterior side, an interior side and a second thickness, and
(c) an interior layer B which is a layer of a third thermoplastic resin optionally containing one or more additives, the interior layer B being disposed between the interior side of first skin layer A and the interior side of second skin layer C and having a third thickness,
wherein the multilayer interlayer is wedge-shaped having a thicker first edge and a thinner second edge,
wherein each of the third thickness and the total thickness is individually consistent throughout the length and width of the integrated multilayer sheet within a variance of thickness of no more than 7%;
the multilayer interlayer further comprises a wedge-shaped film of a fourth thermoplastic resin optionally containing one or more additives, the wedge-shaped film having an exterior side and
an interior side, wherein the interior side of the wedge-shaped film is adhered directly or
indirectly to the exterior side of first skin layer A,
the thicker first edge has a thickness of 1850 µm or less and the thinner second edge has a thickness of 600 µm or more, **characterised in that**:
the integrated multilayer sheet forms the predominant portion of the thickness at both the thicker first edge and the thinner second edge.

2. The multilayer interlayer of claim 1, **characterized in that** the integrated multilayer sheet is a co-extruded integrated multilayer sheet.

3. The multilayer interlayer of claim 1 or claim 2,**characterized in that** the first thermoplastic resin, the second thermoplastic resin and the fourth thermoplastic are each individually a polyvinyl acetal or an ionomer.

4. The multilayer interlayer of any one of claims 1-3, **characterized in that** the first thermoplastic resin and the second thermoplastic resin are the same resin, and the fourth thermoplastic resin is a different resin.

5. The multilayer interlayer of any one of claims 1-4, **characterized in that** the third thermoplastic resin is a polyvinyl acetal or a thermoplastic elastomer.

6. The multilayer interlayer of any one of claims 1-5, **characterized in that** the first thickness and the second thickness are substantially the same, and the third thickness is less.

7. The multilayer interlayer of any one of claims 1-6, **characterized in that** interior layer B is an acoustic damping layer.

8. The multilayer interlayer of any one of claims 1-7, **characterized in that** the thicker first edge has a thickness of 1600 µm or less.

9. The multilayer interlayer of any one of claims 1-8, **characterized in that** (i) the multilayer interlayer comprises greater than 4 layers, (ii) the integrated multilayer sheet is an at least 4-layer system containing a color layer, or (iii) both (i) and (ii).

10. A process for preparing the wedge-shaped multilayer interlayer as set forth in any one of claims 1 to 9, the process comprising the steps of:
(1) providing an integrated multilayer sheet having a length, a width and a total thickness, comprising:
(a) the first skin layer A,
(b) the second skin layer, and
(c) the interior layer B,
wherein each of the third thickness and the total thickness is individually consistent within a variance of thickness of no more than 7% throughout the length and width of the integrated multilayer sheet;
(2) providing the wedge-shaped film of the fourth thermoplastic resin, and
(3) adhering the interior side of the wedge-shaped film directly or indirectly to the exterior side of first skin layer A,
wherein the integrated multilayer sheet forms the predominant portion of the thickness at both the thicker first edge and the thinner second edge.

11. The process of claim 10, wherein in step (1) the integrated multilayer sheet is provided by coextrusion.

12. A laminate comprising a first exterior sheet and second exterior sheet having interposed therebetween a multilayer interlayer, wherein the multilayer interlayer is as set forth in any one of claims 1-9.

13. The laminate of claim 12, wherein at least one of the exterior sheets is a sheet of glass, or wherein the first and second exterior sheets are both sheets of glass.

## Patentansprüche

1. Mehrschichtige Zwischenschicht umfassend:
eine integrierte mehrschichtige Platte, die eine Länge,
eine Breite und eine gesamte Dicke aufweist, umfassend:
(a) eine erste Hautschicht A, die eine Schicht aus einem ersten thermoplastischen Harz ist, das wahlweise ein oder mehrere Zusatzmittel enthält, wobei die erste Hautschicht eine Außenseite, eine Innenseite und eine erste Dicke aufweist,
(b) eine zweite Hautschicht C, die eine Schicht aus einem zweiten thermoplastischen Harz ist, das wahlweise ein oder mehrere Zusatzmittel enthält, wobei die zweite Hautschicht eine Außenseite, eine Innenseite und eine zweite Dicke aufweist, und
(c) eine Innenschicht B, die eine Schicht aus einem dritten thermoplastischen Harz ist, das wahlweise ein oder mehrere Zusatzmittel enthält, wobei die Innenschicht B zwischen der Innenseite der ersten Hautschicht A und der Innenseite in der zweiten Hautschicht C angeordnet ist und eine dritte Dicke aufweist,
wobei die mehrschichtige Zwischenschicht keilförmig ist und eine dickere erste Kante und eine dünnere zweite Kante aufweist,
wobei jede von der dritten Dicke und der gesamten Dicke einzelnen durch die ganze Länge und Breite der integrierten mehrschichtigen Platte hindurch gleichbleibend mit einer Dickenänderung von nicht mehr als 7 % ist,
die mehrschichtige Zwischenschicht ferner eine keilförmige Folie aus einem vierten thermoplastischen Harz umfasst, das wahlweise ein oder mehrere Zusatzmittel enthält, wobei die keilförmige Folie eine Außenseite und eine Innenseite aufweist, wobei die Innenseite der keilförmigen Folie direkt oder indirekt an der Außenseite der ersten Hautschicht A anhaftet,
die dickere erste Kante eine Dicke von 1850 µm oder
weniger aufweist und die dünnere zweite Kante eine Dicke von 600 µm oder mehr aufweist, **dadurch gekennzeichnet,**
**dass**
die integrierte mehrschichtige Platte den Hauptteil der Dicke sowohl an der dickeren ersten Kante als auch der dünneren zweiten Kante bildet.

2. Mehrschichtige Zwischenschicht nach Anspruch 1, **dadurch gekennzeichnet, dass** die integrierte mehrschichtige Platte eine coextrudierte integrierte mehrschichtige Platte ist.

3. Mehrschichtige Zwischenschicht nach Anspruch 1 oder Anspruch 2, **dadurch gekennzeichnet, dass** das erste thermoplastische Harz, das zweite thermoplastische Harz und das vierte thermoplastische Harz einzelnen ein Polyvinylacetal oder ein Ionomer sind.

4. Mehrschichtige Zwischenschicht nach einem der Ansprüche 1-3, **dadurch gekennzeichnet, dass** das erste thermoplastische Harz und das zweite thermoplastische Harz dasselbe Harz sind und das vierte thermoplastische Harz ein anderes Harz ist.

5. Mehrschichtige Zwischenschicht nach einem der Ansprüche1-4, **dadurch gekennzeichnet, dass** das dritte thermoplastische Harz ein Polyvinylacetal oder ein thermoplastisches Elastomer ist.

6. Mehrschichtige Zwischenschicht nach einem der Ansprüche1-5, **dadurch gekennzeichnet, dass** die erste Dicke und die zweite Dicke im Wesentlichen dieselbe sind und die dritte Dicke geringer ist.

7. Mehrschichtige Zwischenschicht nach einem der Ansprüche 1-6, **dadurch gekennzeichnet, dass** die Innenschicht B eine schalldämpfende Schicht ist.

8. Mehrschichtige Zwischenschicht nach einem der Ansprüche 1-7, **dadurch gekennzeichnet, dass** die dickere erste Kante eine Dicke von 1600 µm oder weniger aufweist.

9. Mehrschichtige Zwischenschicht nach einem der Ansprüche 1-8, **dadurch gekennzeichnet, dass** (i) die mehrschichtige Zwischenschicht mehr als 4 Schichten umfasst, (ii) die integrierte mehrschichtige Platte ein mindestens 4-schichtiges System ist, das eine Farbschicht, oder (iii) sowohl (i) als auch (ii). enthält

10. Verfahren zur Herstellung einer keilförmigem mehrschichtigen Zwischenschicht wie in einem der Ansprüche 1 bis 9 aufgeführt, wobei das Verfahren die Schritte umfasst des:
(1) Bereitstellens einer integrierten mehrschichtigen Platte, die eine Länge, eine Breite und eine gesamte Dicke aufweist, umfassend:
(a) die erste Hautschicht A,
(b) die zweite Hautschicht und
(c) die Innenschicht B,
wobei jede von der dritten Dicke und der gesamten Dicke einzeln innerhalb einer Dickenänderung von nicht mehr als 7 % durch die ganzen Länge und Breite der integrierten mehrschichtigen Platte hindurch gleichbleibend ist,
(2) Bereitstellen der keilförmigen Folie aus dem vierten thermoplastischen Harz und
(3) Befestigen der Innenseite der keilförmigen Folie direkt oder indirekt an der Außenseite der ersten Hautschicht A,
wobei die integrierte mehrschichtige Platte den Hauptteil der Dicke sowohl an der dickeren ersten Kante als auch der dünneren zweiten Kante bildet.

11. Verfahren nach Anspruch 10, wobei, in Schritt (1), die integrierte mehrschichtige Platte durch Coextrusion bereitgestellt wird.

12. Schichtstoff umfassend eine erste äußere Platte und eine zweite äußere Platte, zwischen die eine mehrschichtige Zwischenschicht eingeschoben ist, wobei die mehrschichtige Zwischenschicht wie in einem der Ansprüche 1-9 aufgeführt ist.

13. Schichtstoff nach Anspruch 12, wobei mindestens eine von den äußeren Platten eine Glasscheibe ist oder wobei die erste und zweite äußere Platte beide Glasscheiben sind.

## Revendications

1. Intercouche multi-couches comprenant :
une feuille multi-couches intégrée ayant une longueur,
une largeur et une épaisseur totale, comprenant :
(a) une première couche de peau A qui est une couche d'une première résine thermoplastique contenant éventuellement un ou plusieurs additifs, la première couche de peau ayant un côté extérieur, un côté intérieur et une première épaisseur,
(b) une deuxième couche de peau C qui est une couche d'une deuxième résine thermoplastique contenant éventuellement un ou plusieurs additifs, la deuxième couche de peau ayant un côté extérieur, un côté intérieur et une deuxième épaisseur, et
(c) une couche intérieure B qui est une couche d'une troisième résine thermoplastique contenant éventuellement un ou plusieurs additifs, la couche intérieure B étant disposée entre le côté intérieur de la première couche de peau A et le côté intérieur de la deuxième couche de peau C et ayant une troisième épaisseur,
l'intercouche multi-couches étant formée en cale ayant un premier côté plus épais et un second côté plus mince,
chacune de la troisième épaisseur et de l'épaisseur totale étant individuellement consistante sur l'ensemble de la longueur et de la largeur de la feuille multi-couches intégrée avec une variance d'épaisseur de pas plus de 7 % ;
l'intercouche multi-couches comprend en outre un film en forme de cale d'une quatrième résine thermoplastique contenant éventuellement un ou
plusieurs additifs, le côté intérieur du film en forme de cale étant collé directement ou indirectement au côté extérieur de la première couche de peau A,
le premier bord plus épais a une épaisseur de 1850 □m ou moins et le second bord plus mince a une épaisseur de 600 µm ou plus, **caractérisée en ce que**
la feuille multi-couches intégrée forme la partie prédominante de l'épaisseur aux deux premier bord plus épais et second bord plus mince.

2. Intercouche multi-couches selon la revendciation 1, **caractérisée en ce que** la feuille multi-couches intégrée est une feuille multi-couches intégrée co-extrudée.

3. Intercouche multi-couches selon la revendication 1 ou la revendication 2, **caractérisée en ce que** la première résine thermoplastique, la deuxième résine thermoplastique et la quatrième résine thermoplastique sont chacune individuellement un polyvinyl acétal ou un ionomère.

4. Intercouche multi-couches selon l'une quelconque des revendications 1 à 3, **caractérisée en ce que** la première résine thermoplastique et la deuxième résine thermoplastique sont la même résine, et la quatrième résine thermoplastique est une résine différente.

5. Intercouche multi-couches selon l'une quelconque des revendications 1 à 4, **caractérisée en ce que** la troisième résine thermoplastique est un polyvinyl acétal ou un élastomère thermoplastique.

6. Intercouche multi-couches selon l'une quelconque des revendications 1 à 5, **caractérisée en ce que** la première épaisseur et la deuxième épaisseur sont essentiellement les mêmes, et la troisième épaisseur est inférieure.

7. I ntercouche multi-couches selon l'une quelconque des revendications 1 à 6, **caractérisée en ce que** la couche intérieure B est une couche d'amortissage acoustique.

8. Intercouche multi-couches selon l'une quelconque des revendications 1 à 7, **caractérisée en ce que** le premier bord plus épais a une épaisseur de 1600 □m ou moins.

9. Intercouche multi-couches selon l'une quelconque des revendications 1 à 8, **caractérisée en ce que** (i) l'intercouche multi-couches comprend plus de 4 couches, (ii) la feuille multi-couche intégrée est un système d'au moins 4 couches contenant une couche de couleur, ou (iii) les deux (i) et (ii).

10. Procédé de préparation d'une intercouche multi-couches en forme de cale telle que présentée dans les revendications 1 à 9, le procédé comprenant les étapes consistant à :
(1) fournir une feuille multi-couches intégrée ayant une longueur, une largeur et une épaisseur totale, comprenant :
(a) la première couche de peau A,
(b) la deuxième couche de peau, et
(c) la couche intérieure B
chacune de la troisième épaisseur et de l'épaisseur totale étant individuellement consistante avec une variance d'épaisseur de pas plus de 7 % sur l'ensemble de la longueur et de la largeur de la feuille multi-couches intégrée ;
(2) fournir le film en forme de cale de la quatrième résine thermoplastique, et
(3) coller le côté intérieur du film en forme de cale directement ou indirectement au côté extérieur de la première couche de peau A,
la feuille multi-couches intégrée formant la partie prédominante de l'épaisseur aux deux premier bord plus épais et second bord plus mince.

11. Procédé selon la revendication 10, dans lequel dans l'étape (1) la feuille multi-couches intégrée est fournie par co-extrusion.

12. Stratifié comprenant une première feuille extérieure et une seconde feuille extérieure ayant interposée entre elles une intercouche multi-couches, l'intercouche multi-couches étant telle que présentée dans l'une quelconque des revendications 1 à 9.

13. Stratifié selon la revendication 12, dans lequel au moins une des feuilles extérieures est une feuille de verre, ou les première et seconde feuilles extérieures étant toutes les deux des feuilles de verre.
